(19) **Europäisches Patentamt**
**European Patent Office**
**Office européen des brevets**

(11) **EP 4 598 167 A1**

(12) **EUROPEAN PATENT APPLICATION**
published in accordance with Art. 153(4) EPC

(43) Date of publication:
06.08.2025 Bulletin 2025/32

(21) Application number: 23873025.3

(22) Date of filing: 25.09.2023

(51) International Patent Classification (IPC):
H04W 64/00 (2009.01)   H04W 56/00 (2009.01)
H04B 17/20 (2015.01)   H04W 4/029 (2018.01)
H04W 84/06 (2009.01)

(52) Cooperative Patent Classification (CPC):
H04B 17/20; H04W 4/029; H04W 56/00;
H04W 64/00; H04W 84/06

(86) International application number:
PCT/KR2023/014664

(87) International publication number:
WO 2024/071908 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.09.2022 US 202263411593 P

(71) Applicant: LG Electronics Inc.
Yeongdeungpo-gu
Seoul 07336 (KR)

(72) Inventors:
• PARK, Haewook
 Seoul 06772 (KR)
• KIM, Kijun
 Seoul 06772 (KR)
• KO, Hyunsoo
 Seoul 06772 (KR)
• HWANG, Seunggye
 Seoul 06772 (KR)

(74) Representative: Frenkel, Matthias Alexander
Wuesthoff & Wuesthoff
Patentanwälte und Rechtsanwalt PartG mbB
Schweigerstraße 2
81541 München (DE)

(54) **POSITIONING METHOD AND APPARATUS THEREFOR IN WIRELESS COMMUNICATION SYSTEM**

(57) According to at least one of the examples disclosed in the present specification, a first device can obtain timing advance (TA) information on the basis of a first link between a non-terrestrial node for a non-terrestrial network (NTN) and the first device, transmit assistance data for NTN-based terminal positioning to a location management function (LMF) node, measure the time difference between an uplink reference signal and a downlink reference signal by means of the first link between the non-terrestrial node and the first device, and transmit, to the LMF node, a measurement report including information about the time difference, wherein the TA information includes common TA information between the non-terrestrial node and a reference point (RP) set on the first link, and the first device can report the common TA information to the LMF node by means of the assistance data.

**FIG. 17**

```
Obtain TA information
based on a first link          A05

Transmit assistance data to
LMF node                       A10

Measure time difference between
DL RS and UL RS                A15

Transmit a measurement report
to LMF node                    A20
```

**Description**

**TECHNICAL FIELD**

The present disclosure relates to a wireless communication system, more particularly to, a positioning method in a wireless communication system supporting a non-terrestrial network and device therefor.

**BACKGROUND**

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

**DISCLOSURE**

**TECHNICAL PROBLEM**

The present disclosure aims to provide a method and device for performing user equipment (UE) positioning through transmission and reception of reference signals in a wireless communication system supporting a non-terrestrial network.

It will be appreciated by persons skilled in the art that the objects that could be achieved with the present disclosure are not limited to what has been particularly described hereinabove and the above and other objects that the present disclosure could achieve will be more clearly understood from the following detailed description.

**TECHNICAL SOLUTION**

In an aspect of the present disclosure, provided herein is a method performed by a first device in a wireless communication system including a non-terrestrial network (NTN). The method may include: obtaining timing advance (TA) information based on a first link between a non-terrestrial node for the NTN and the first device; transmitting assistance data for NTN-based user equipment (UE) positioning to a location management function (LMF) node; measuring a time difference between an uplink reference signal and a downlink reference signal; and transmitting a measurement report including information regarding the time difference to the LMF node. The TA information may include common TA information between a reference point (RP) configured on the first link and the non-terrestrial node. The first device may report the common TA information to the LMF node through the assistance data.

The non-terrestrial node may be a satellite, and the first device may be a terrestrial base station.

The first link may be a feeder link between the satellite and the terrestrial base station,
The time difference between the uplink reference signal and the downlink reference signal may be a time difference between a positioning reference signal (PRS) and a sounding reference signal (SRS) at the RP. The PRS may be transmitted by the first device to a UE through the non-terrestrial node, and the SRS may be received by the first device from the UE through the non-terrestrial node.

For the NTN-based UE positioning, information regarding a UE downlink timing error may be provided to the LMF node.

The information regarding the UE downlink timing error may include an estimate of a downlink timing shift related to a Doppler effect.

The information regarding the UE downlink timing error may be measured by a target UE for the NTN-based UE positioning.

The information regarding the UE downlink timing error may be related to a time period in which the target UE measures the time difference between the uplink reference signal and the downlink reference signal.

The NTN-based UE positioning may be performed independently of a global navigation satellite system (GNSS).

In another aspect of the present disclosure, provided herein is a processor-readable recording medium having recorded thereon a program for executing the above-described method

In another aspect of the present disclosure, provided herein is a first device configured to perform the above-described method.

In another aspect of the present disclosure, provided herein is a method performed by a second device in a wireless communication system including an NTN. The method may include: obtaining TA information based on a second link between a non-terrestrial node for the NTN and the second device; receiving first assistance data for NTN-based UE positioning from an LMF node; measuring a time difference between an uplink reference signal and a downlink reference signal; and transmitting a measurement report including information regarding the time difference and second assistance data to the LMF node. The TA information may include UE-specific TA information. The second device may report a timing error measured by the second device to the LMF node through the second assistance data.

The second device may be a UE. The second device may be a processing device that controls the UE.

The non-terrestrial node may be a satellite, and the second device may be a UE.

The second link may be a service link between the satellite and the UE.

The timing error measured by the second device may be a UE downlink timing error measured by the UE.

The time difference between the UL reference signal and the DL reference signal may be a difference between a timing at which the second device receives a PRS from a base station through the non-terrestrial node and a timing at which the second device transmits an SRS to the base station through the non-terrestrial node.

Information regarding the UE downlink timing error may include an estimate of a downlink timing shift related to a Doppler effect.

The information regarding the UE downlink timing error may be related to a time period in which the UE measures the time difference between the UL reference signal and the downlink reference signal.

The NTN-based UE positioning may be performed independently of a GNSS.

In a further aspect of the present disclosure, provided herein is a second device configured to perform the above-described method.

## ADVANTAGEOUS EFFECTS

According to an embodiment of the present disclosure, the location of a user equipment (UE) may be estimated through transmission and reception of radio access technology-dependent (RAT-dependent) reference signals even in a non-terrestrial network, thereby providing a positioning technique that is verifiable and highly reliable

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

## BRIEF DESCRIPTION OF THE DRAWINGS

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot

FIG. 5 illustrates an exemplary physical downlink shared channel (PDSCH) reception and acknowledgement/negative acknowledgement (ACK/NACK) transmission process.

FIG. 6 illustrates an exemplary physical uplink shared channel (PUSCH) transmission process.

FIG. 7 illustrates an example of setting a positioning protocol.

FIG. 8 illustrates an example of OTDOA.

FIG. 9 illustrates an example of multi-RTT.

FIG. 10 illustrates scenarios for a non-terrestrial network that a user equipment (UE) is capable of access.

FIG. 11 is a diagram for explaining a UE-specific timing advance (TA) and a common TA in an NTN.

FIG. 12 is a diagram for explaining a TA in each NTN scenario.

FIG. 13 is a diagram for explaining the type of cell supported by a satellite.

FIG. 14 is a diagram for explaining scheduling offset parameters in an NTN.

FIG. 15 is a diagram for explaining multi-round trip time (multi-RTT) measurement based on a single satellite.

FIG. 16 is a diagram for explaining system operations supporting an NTN according to an embodiment.

FIG. 17 illustrates the operation of a first device according to one embodiment.

FIG. 18 illustrates the operation of a second device according to one embodiment.

FIGS. 19 to 22 illustrate an example of a communication system 1 and wireless devices applicable to the present disclosure.

FIG. 23 illustrates an NTN applicable to the present disclosure.

FIG. 24 illustrates a very-small-aperture terminal (VSAT) applicable to the present disclosure.

## DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In an embodiment of the present disclosure, for simplicity, this technology will be referred to as NR (New Radio or New RAT).

For the sake of clarity, 3GPP NR is mainly described, but the technical idea of the present disclosure is not limited thereto.

For the background art relevant to the present disclosure, the definitions of terms, and abbreviations, the following documents may be incorporated by reference.

- 38.211: Physical channels and modulation
- 38.212: Multiplexing and channel coding
- 38.213: Physical layer procedures for control
- 38.214: Physical layer procedures for data
- 38.215: Physical layer measurements
- 38.300: NR and NG-RAN Overall Description
- 38.304: User Equipment (UE) procedures in idle mode and in RRC Inactive state
- 38.321Medium Access Control (MAC) protocol specification
- 38.331: Radio Resource Control (RRC) protocol specification
- 37.213: Introduction of channel access procedures to unlicensed spectrum for NR-based access

- 36.355: LTE Positioning Protocol
- 37.355: LTE Positioning Protocol

Terms and Abbreviations

- 5GC: 5G Core Network
- 5GS: 5G System
- AoA: Angle of Arrival
- AP: Access Point
- CID: Cell ID
- E-CID: Enhanced Cell ID
- GNSS: Global Navigation Satellite System
- GPS: Global Positioning System
- LCS: LoCation Service
- LMF: Location Management Function
- LPP: LTE Positioning Protocol
- MO-LR: Mobile Originated Location Request
- MT-LR: Mobile Terminated Location Request
- NRPPa: NR Positioning Protocol A
- OTDOA: Observed Time Difference Of Arrival
- PDU: Protocol Data Unit
- PRS: Positioning Reference Signal
- RRM: Radio Resource Management
- RSSI: Received Signal Strength Indicator
- RSTD: Reference Signal Time Difference
- ToA: Time of Arrival
- TP: Transmission Point
- TRP: Transmission and Reception Point
- UE: User Equipment
- SS: Search Space
- CSS: Common Search Space
- USS: UE-specific Search Space
- PDCCH: Physical Downlink Control Channel
- PDSCH: Physical Downlink Shared Channel;
- PUCCH: Physical Uplink Control Channel;
- PUSCH: Physical Uplink Shared Channel;
- DCI: Downlink Control Information
- UCI: Uplink Control Information
- SI: System Information
- SIB: System Information Block
- MIB: Master Information Block
- RRC: Radio Resource Control
- DRX: Discontinuous Reception
- RNTI: Radio Network Temporary Identifier
- CSI: Channel state information
- PCell: Primary Cell
- SCell: Secondary Cell
- PSCell: Primary SCG (Secondary Cell Group) Cell
- CA: Carrier Aggregation
- WUS: Wake up Signal
- TX: Transmitter
- RX: Receiver

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

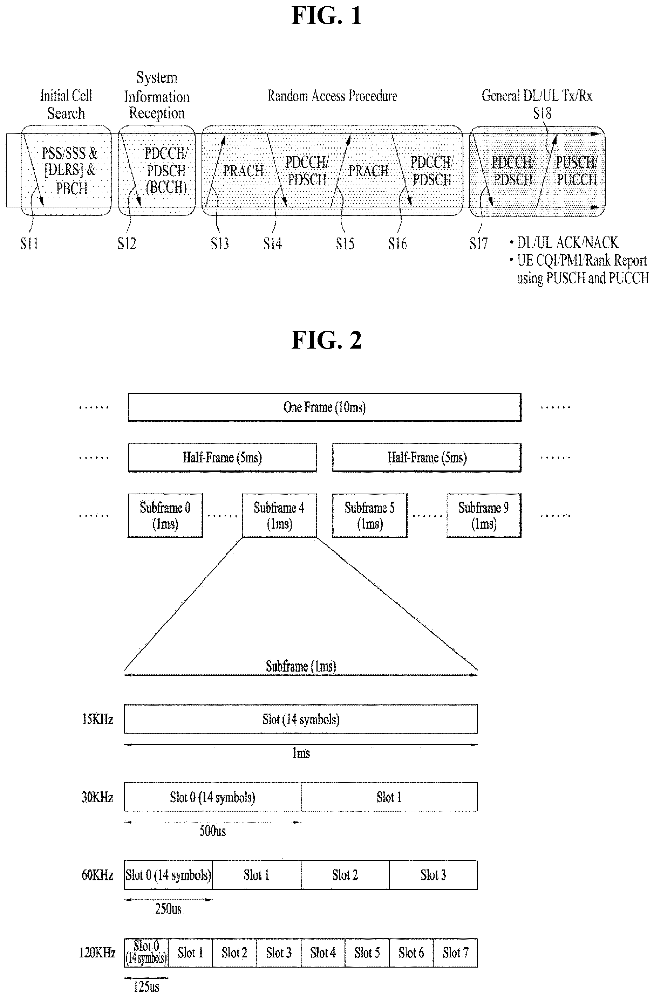

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms halfframes (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| $N^{slot}_{symb}$: Number of symbols in a slot<br>$N^{frame,u}_{slot}$: Number of slots in a frame<br>$N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

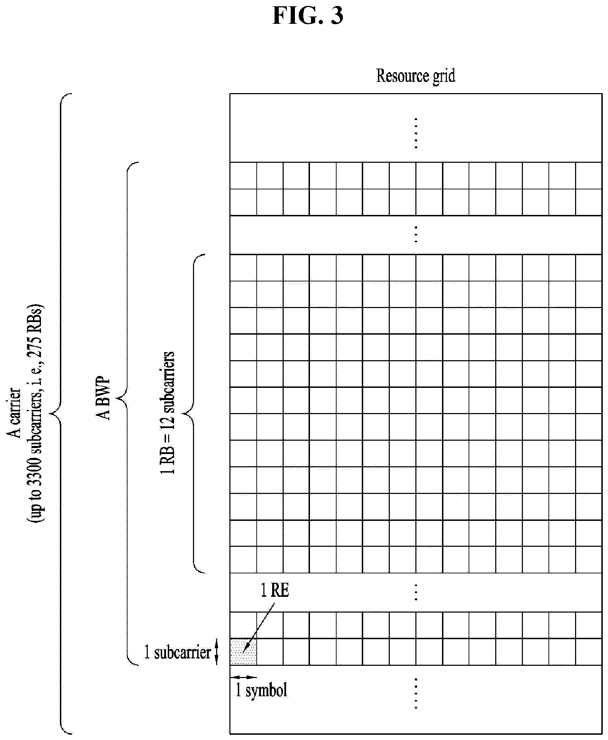

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

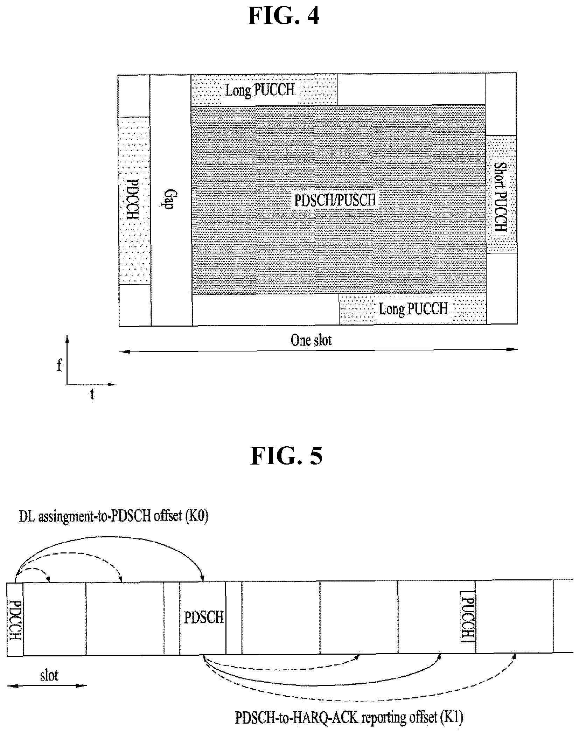

FIG. 4 illustrates an example of mapping physical channels in a slot. In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 5 illustrates an exemplary PDSCH reception and ACK/NACK transmission process. Referring to FIG. 5, the UE may detect a PDCCH in slot #n. The PDCCH includes DL scheduling information (e.g., DCI format 1_0 or DCI format 1_1), and indicates a DL assignment-to-PDSCH offset, K0 and a PDSCH-HARQ-ACK reporting offset, K1. After receiving a PDSCH in slot #(n+K0) according to the scheduling information of slot #n, the UE may transmit UCI on a PUCCH in slot #(n+K1). The UCI may include an HARQ-ACK response to the PDSCH. In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

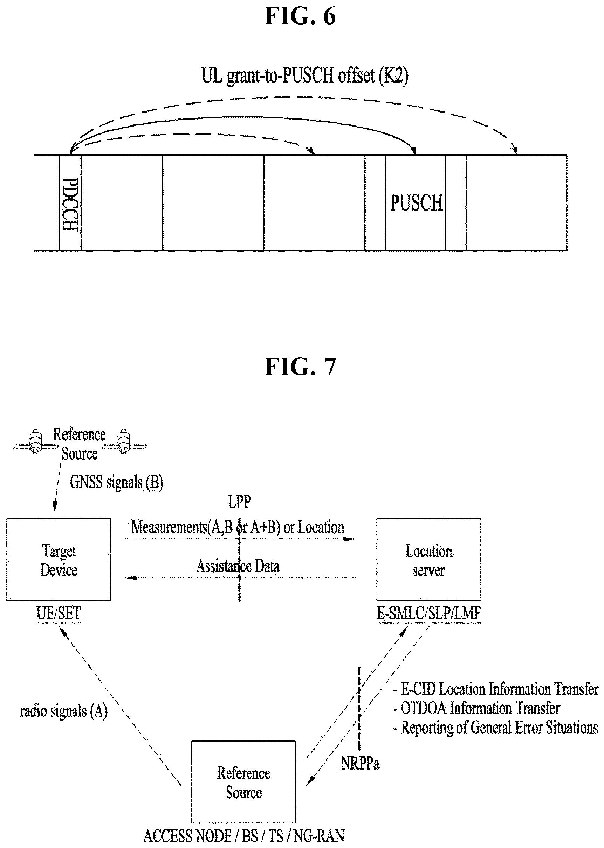

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). The UE may then transmit a PUSCH in slot #(n+K2) according to the scheduling information in slot #n. The PUSCH includes a UL-SCH TB.

## Positioning

Positioning may refer to determining the geographical position and/or velocity of the UE based on measurement of radio signals. Location information may be requested by and reported to a client (e.g., an application) associated with to the UE. The location information may also be requested by a client within or connected to a core network. The location information may be reported in standard formats such as formats for cell-based or geographical coordinates, together with estimated errors of the position and velocity of the UE and/or a positioning method used for positioning.

FIG. 7 is a diagram illustrating an exemplary positioning protocol configuration for positioning a UE, to which various embodiments are applicable.

An LTE positioning protocol (LPP) may be used as a point-to-point protocol between a location server (E-SMLC and/or SLP and/or LMF) and a target device (UE and/or SET), for positioning the target device using position-related measurements obtained from one or more reference resources. The target device and the location server may exchange measurements and/or location information based on signal A and/or signal B over the LPP.

NRPPa may be used for information exchange between a reference source (access node and/or BS and/or TP and/or NG-RAN node) and the location server.

The NRPPa protocol may provide the following functions.

- E-CID Location Information Transfer. This function allows the reference source to exchange location information with the LMF for the purpose of E-CID positioning.
- OTDOA Information Transfer. This function allows the reference source to exchange information with the LMF for the purpose of OTDOA positioning.
- Reporting of General Error Situations. This function allows reporting of general error situations, for which function-specific error messages have not been defined.

Positioning methods supported in the NG-RAN may include a GNSS, an OTDOA, an E-CID, barometric sensor positioning, WLAN positioning, Bluetooth positioning, a TBS, uplink time difference of arrival (UTDOA) etc. Although any one of the positioning methods may be used for UE positioning, two or more positioning methods may be used for UE positioning.

OTDOA (Observed Time Difference Of Arrival)

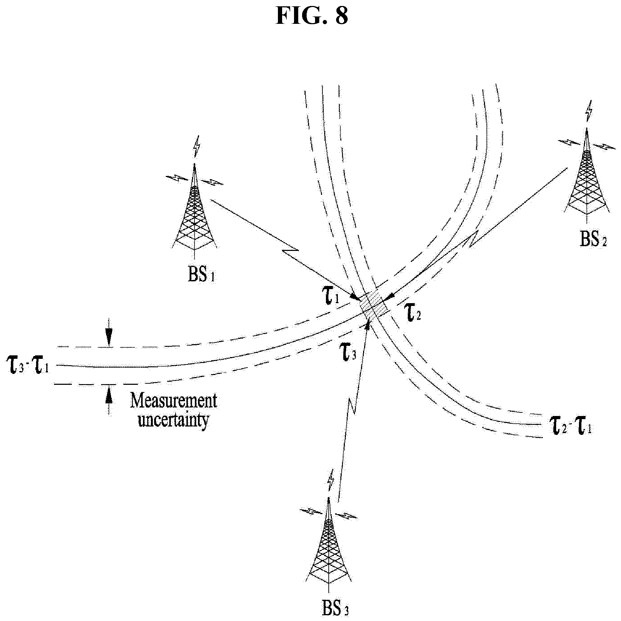

FIG. 8 is a diagram illustrating an observed time difference of arrival (OTDOA) positioning method, to which various embodiments are applicable;

The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

For example, RSTD for two TPs may be calculated based on Equation 1 below.

[Equation 1]

$$RSTDi_{,1} = \frac{\sqrt{(x_t - x_i)^2 + (y_t - y_i)^2}}{c} - \frac{\sqrt{(x_t - x_1)^2 + (y_t - y_1)^2}}{c} + (T_i - T_1) + (n_i - n_1)$$

In Equation 1, c is the speed of light, $\{x_t, y_t\}$ are (unknown) coordinates of a target UE, $\{x_i, y_i\}$ are (known) coordinates of a TP, and $\{x_1, y_1\}$ are coordinates of a reference TP (or another TP). Here, $(T_i - T_1)$ is a transmission time offset between two TPs, referred to as "real time differences" (RTDs), and $n_i$ and $n_1$ are UE ToA measurement error values.

E-CID (Enhanced Cell ID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

For example, the serving gNB may implement the E-CID positioning method using an E-UTRA measurement value provided by the UE.

Measurement elements usable for E-CID positioning may be, for example, as follows.

UE measurement: E-UTRA reference signal received power (RSRP), E-UTRA reference signal received quality (RSRQ), UE E-UTRA reception (Rx)-transmission (Tx) time difference, GERAN/WLAN reference signal strength indication (RSSI), UTRAN common pilot channel (CPICH) received signal code power (RSCP), and/or UTRAN CPICH Ec/Io

E-UTRAN measurement: ng-eNB Rx-Tx time difference, timing advance (TADV), and/or AoA

Here, TADV may be divided into Type 1 and Type 2 as follows.

$$TADV\ Type\ 1 = (ng\text{-}eNB\ Rx\text{-}Tx\ time\ difference) + (UE\ E\text{-}UTRA\ Rx\text{-}Tx\ time\ difference)$$

$$TADV\ Type\ 2 = ng\text{-}eNB\ Rx\text{-}Tx\ time\ difference$$

AoA may be used to measure the direction of the UE. AoA is defined as the estimated angle of the UE counterclockwise from the eNB/TP. In this case, a geographical reference direction may be north. The eNB/TP may use a UL signal such as an SRS and/or a DMRS for AoA measurement. The accuracy of measurement of AoA increases as the arrangement of an antenna array increases. When antenna arrays are arranged at the same interval, signals received at adjacent antenna elements may have constant phase rotate.

UTDOA (Uplink Time Difference of Arrival)

UTDOA is a method of determining the location of a UE by estimating the arrival time of the SRS. When calculating the estimated SRS arrival time, the location of the UE can be estimated through an arrival time difference with another cell (or base station/TP) by using the serving cell as a reference cell. To implement UTDOA, the E-SMLC may indicate a serving cell of the target UE in order to instruct the target UE to transmit SRS. In addition, E-SMLC can provide configuration such as periodic/aperiodic SRS, bandwidth and frequency/group/sequence hopping.

Multi-RTT (round trip time)

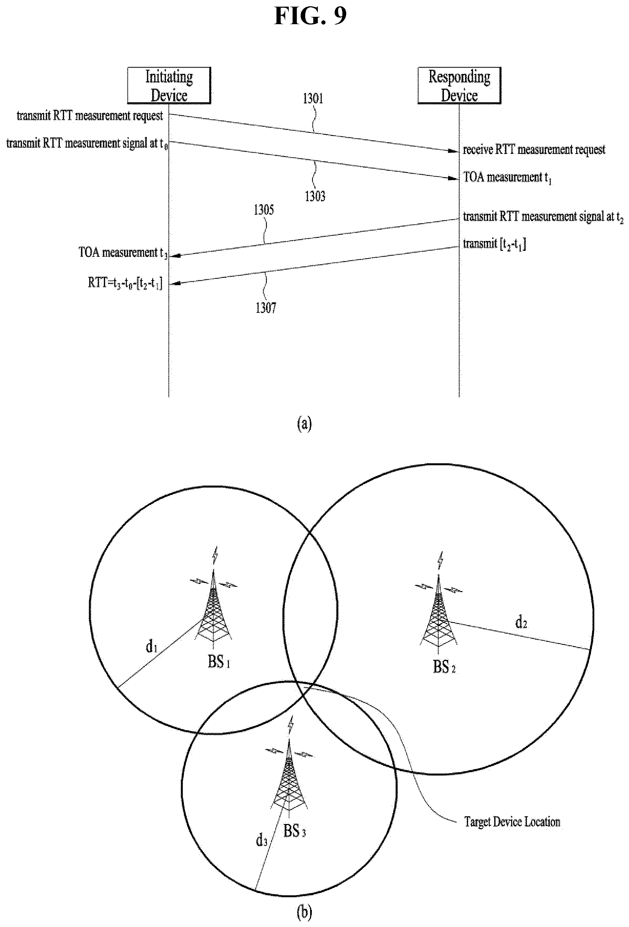

FIG. 9 is a diagram illustrating an exemplary multi-round trip time (multi-RTT) positioning method to which various embodiments are applicable.

Referring to FIG. 9(a), an exemplary RTT procedure is illustrated, in which an initiating device and a responding device perform ToA measurements, and the responding device provides ToA measurements to the initiating device, for RTT measurement (calculation). The initiating device may be a TRP and/or a UE, and the responding device may be a UE and/or a TRP.

The initiating device may transmit an RTT measurement request, and the responding device may receive the RTT measurement request (1301).

The initiating device may transmit an RTT measurement signal at t0 and the responding device may acquire a ToA measurement t1(1303).

The responding device may transmit an RTT measurement signal at t2 and the initiating device may acquire a ToA measurement t3 (1305).

The responding device may transmit information about [t2-t1], and the initiating device may receive the information and calculate an RTT by Equation 2 (1307). The information may be transmitted and received based on a separate signal or in the RTT measurement signal (1305).

[Equation 2]

$$RTT = t_3 - t_0 - [t_2 - t_1]$$

Referring to FIG. 9(b), an RTT may correspond to a double-range measurement between two devices. Positioning estimation may be performed from the corresponding information, and multilateration may be used for the positioning estimation. d1, d2, and d3 may be determined based on the measured RTT, and the location of a target device may be determined to be the intersection of the circumferences of circles with radiuses of d1, d2, and d3, in which BS1, BS2, and BS3 (or TRPs) are centered, respectively.

**NTN (Non-Terrestrial Network)**

Non-Terrestrial Network (NTN) refers to a network or a network segment, which is configured to use a radio resource in a satellite or an Unmanned Aircraft System (UAS) platform.

In order to ensure a wider coverage or to provide a wireless communication service in a place in which it is not easy to install a wireless communication BS, use of a non-terrestrial network (NR NTN) or LTE NTN service has been considered. An NR or LTE service as an existing terrestrial network (TN) service provides a wireless communication service to UEs by installing a corresponding BS on the ground, but the NTN service provides a wireless communication service to UEs by installing a BS at places on the ground, where an artificial satellite (a geostationary earth orbit, a low-earth orbit, a medium-earth orbit, etc.), an airplanes, an unmanned plane, a drone, or the like is not positioned rather than installing the BS on the ground. Scenarios such as HAPS (high altitude platform) and ATG (air to ground) may be included.

For (Rel-17/18) NTN services, frequency division duplex (FDD) is primarily considered (however, this does not mean that time division duplex (TDD) is completely excluded). It is assumed that the UE has GNSS capability.

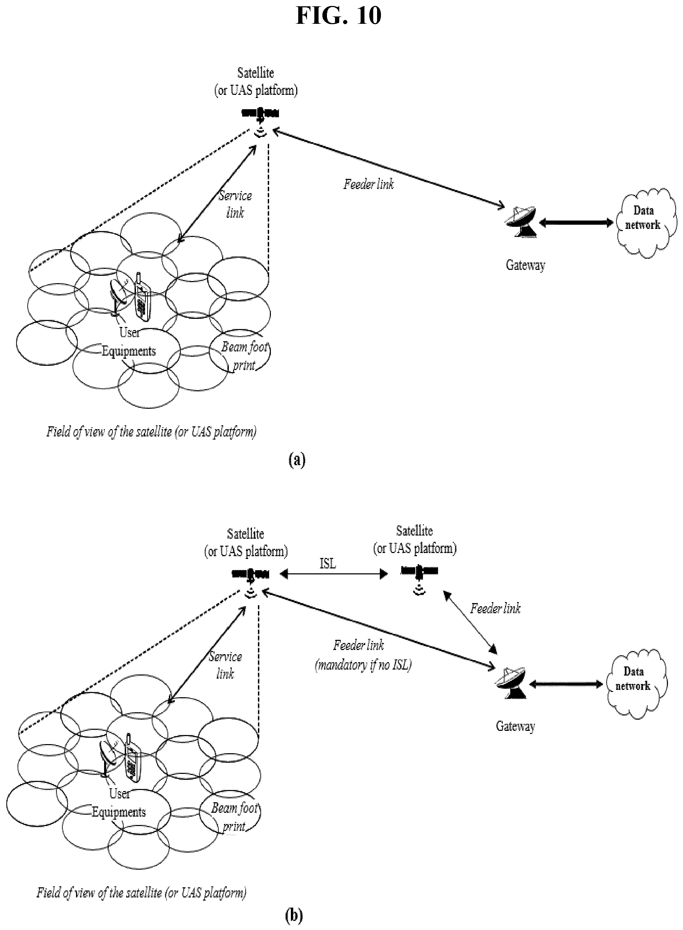

FIG. 10 illustrates exemplary scenarios for an NTN that a UE is capable of access. Specifically, FIG. 10(a) illustrates an NTN scenario based on transparent payload, and FIG. 10(b) illustrates an NTN scenario based on regenerative payload. The transparent payload performs roles such as radio frequency filtering, frequency conversion and amplification, and so on. Thus, waveform signals in a transmission payload do not change. On the other hand, the regenerative payload performs roles such as radio frequency filtering, frequency conversion and amplification as well as demodulation/decoding, switch and/or routing, coding/modulation, and so on. Therefore, all or some of the BS functions may be considered to be mounted on a satellite.

The NTN may be usually characterized by the following factors.

- One or more sat-gateways for connecting the NTN to a common data network:

    A Geostationary Earth Orbiting (GEO) satellite may be provided from one or more sat-gateways disposed in a coverage (e.g., regional or even continental coverage) targeted by a satellite. UEs within a cell may be assumed to be served by only one sat-gateway;
    A non-GEO satellite may be successively served by one or more gat-gateways. A system may ensure a service and feeder link continuity between serving sat-gateways for a time period sufficient to proceed with mobility anchoring and handover.

- Feeder link or wireless link between sat-gateway and satellite (or UAS platform)
- Service link or wireless link between UE and satellite (or UAS platform)
- Satellite (or UAS platform) for implementing one of transparent or regenerative (including onboard processing) payload. Satellite (or UAS platform) may generally generate multiple beams in a service area with a boundary defined by a field of view of the satellite (or UAS platform). The footprint of the beam may be generally elliptical. The field of view of the satellite (or UAS platform) may be determined according to an onboard antenna diagram and the minimum elevation angle.

Transparent payload: Radio frequency filtering, and frequency conversion and amplification. Thus, a waveform signal repeated by a payload is not changed.

Regenerative payload: Demodulation/decoding, switching and/or routing, coding/modulation as well as radio frequency filtering and frequency conversion and amplification. This is practically equivalent to having all or some of functions of a BS (e.g., gNB) on a satellite (or UAS platform).

- Inter-satellite links (ISL) in the case of a satellite group. To this end, the satellite requires a regeneration payload. The ISLs may operate at an RF frequency or a wide band.

- A UE may be served by a satellite (or UAS platform) within a target service area.

Table 3 below shows an example of types of a satellite (or UAS platform).

[Table 3]

| Platforms | Altitude range | Orbit | Typical beam footprint size |
|---|---|---|---|
| Low-Earth Orbit (LEO) satellite | 300 - 1500 km | Circular around the earth | 100 - 1000 km |
| Medium-Earth Orbit (MEO) satellite | 7000 - 25000 km | | 100 - 1000 km |
| Geostationary Earth Orbit (GEO) satellite | 35 786 km | notional station keeping position fixed in terms of elevation/azimuth with respect to a given earth point | 200 - 3500 km |
| UAS platform (including HAPS) | 8 - 50 km (20 km for HAPS) | | 5 - 200 km |
| High Elliptical Orbit (HEO) satellite | 400 - 50000 km | Elliptical around the earth | 200 - 3500 km |

Generally,

- The GEO satellite and the UAS may be used to provide a continental, regional, or local service.
- A Low Earth Orbiting (LEO) and Medium Earth Orbiting (MEO) group may be used to provide a service in both the Northern and Southern Hemispheres. In some cases, constellation may also provide global coverage including a polar region. For later, an appropriate orbital inclination, sufficient generated beams, and inter-satellite links may be required.

A Highly Elliptical Orbiting (HEO) satellite system may also be considered.
Hereinafter, a wireless communication system in an NTN including the following six reference scenarios will be described.

- Circuit orbit and nominal station keeping platform
- Highest Round Trip Delay (RTD) constraint
- Highest Doppler constraint
- Transparent or regenerative payload
- One case with ISL and one case without ISL. In the case of inter-satellite link, a regenerative payload may be required.
- Fixed or steerable beams causing a moving or fixed footprint on the ground.

Six reference scenarios are considered in Tables 4 and 5.

[Table 4]

| | Transparent satellite | Regenerative satellite |
|---|---|---|
| GEO based non-terrestrial access network | Scenario A | Scenario B |
| LEO based non-terrestrial access network: steerable beams | Scenario C1 | Scenario D1 |
| LEO based non-terrestrial access network: the beams move with the satellite | Scenario C2 | Scenario D2 |

[Table 5]

| Scenarios | GEO based non-terrestrial access network (Scenario A and B) | LEO based non-terrestrial access network (Scenario C & D) |
|---|---|---|
| Orbit type | notional station keeping position fixed in terms of elevation/azimuth with respect to a given earth point | circular orbiting around the earth |
| Altitude | 35,786 km | 600 km1,200 km |
| Spectrum (service link) | <6 GHz (e.g. 2 GHz) >6 GHz (e.g. DL 20 GHz, UL 30 GHz) | |
| Max channel bandwidth capability (service link) | 30 MHz for band < 6 GHz1 GHz for band > 6 GHz | |
| Payload | Scenario A : Transparent (including radio frequency function only) Scenario B: regenerative (including all or part of RAN functions) | Scenario C: Transparent (including radio frequency function only) Scenario D: Regenerative (including all or part of RAN functions) |
| Inter-Satellite link | No | Scenario C: NoScenario D: Yes/No (Both cases are possible.) |
| Earth-fixed beams | Yes | Scenario C1: Yes (steerable beams), see note 1Scenario<br>C2: No (the beams move with the satellite)<br>Scenario D 1: Yes (steerable beams), see note 1<br>Scenario D 2: No (the beams move with the satellite) |
| Max beam foot print size (edge to edge) regardless of the elevation angle | 3500 km (Note 5) | 1000 km |
| Min Elevation angle for both sat-gateway and user equipment | 10° for service link and 10° for feeder link | 10° for service link and 10° for feeder link |
| Max distance between satellite and user equipment at min elevation angle | 40,581 km | 1,932 km (600 km altitude)3,131 km (1,200 km altitude) |
| Max Round Trip Delay (propagation delay only) | Scenario A: 541.46 ms (service and feeder links)Scenario B: 270.73 ms (service link only) | Scenario C: (transparent payload: service and feeder links)<br>25.77 ms (600km)<br>41.77 ms (1200km)<br>Scenario D: (regenerative payload: service link only)<br>12.89 ms (600km)<br>20.89 ms (1200km) |

(continued)

| Scenarios | GEO based non-terrestrial access network (Scenario A and B) | LEO based non-terrestrial access network (Scenario C & D) |
|---|---|---|
| Max differential delay within a cell (Note 6) | 10.3 ms | 3.12 ms and 3.18 ms for respectively 600km and 1200km |
| Max Doppler shift (earth fixed user equipment) | 0.93 ppm | 24 ppm (600km)21ppm(1200km) |
| Max Doppler shift variation (earth fixed user equipment) | 0.000 045 ppm/s | 0.27ppm/s (600km)0.13ppm/s(1200km ) |
| User equipment motion on the earth | 1200 km/h (e.g. aircraft) | 500 km/h (e.g. high speed train)Possibly 1200 km/h (e.g. aircraft) |
| User equipment antenna types | Omnidirectional antenna (linear polarisation), assuming 0 dBi Directive antenna (up to 60 cm equivalent aperture diameter in circular polarisation) | |
| User equipment Tx power | Omnidirectional antenna: UE power class 3 with up to 200 mWDirective antenna: up to 20 W | |
| User equipment Noise figure | Omnidirectional antenna: 7 dB Directive antenna: 1.2 dB | |
| Service link | 3GPP defined New Radio | |
| Feeder link | 3GPP or non-3GPP defined Radio interface | 3GPP or non-3GPP defined Radio interface |

Reference 1: Each satellite may steer a beam to a fixed point on the Earth by using beamforming technology. This may be applied for a time corresponding to visibility of the satellite.

Reference 2: The max delay variation in the beam (UE fixed on the ground) may be calculated based on the minimum elevation angle (Min Elevation angle) for both the gateway and the UE.

Reference 3: The maximum differential delay in the beam may be calculated based on a diameter of the maximum beam footprint at the lowest point (at nadir).

Reference 4: The speed of light used to calculate the delay may be 299,792,458 m/s.

Reference 5: The size of the maximum beam footprint of the GEO may be determined based on GEO High Throughput system technology of the current state under the assumption that there is a spot beam at a coverage edge (low altitude).

Reference 6: The maximum differential delay at a cell level may be calculated in consideration at a beam level delay for the largest beam size. When the size of the beam is small or medium, the cell may include two or more beams. However, the cumulative differential delay of all beams in the cell may not exceed the maximum differential delay at a cell level in Table 10.

The NTN-related description of the present specification may be applied to an NTN GEO scenario and any non-geostationary orbit (NGSO) scenario having a circuit orbit with an altitude equal to or greater than 600 km.

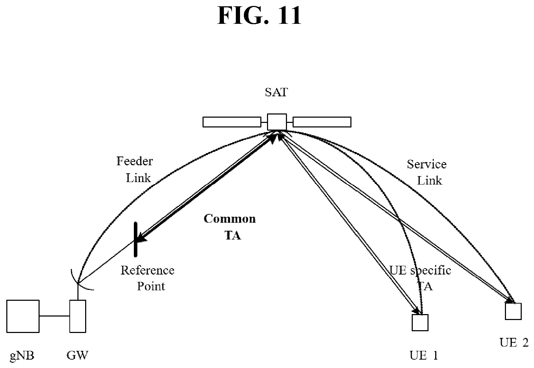

FIG. 11 is a diagram for explaining a UE-specific timing advance (TA) and a common TA in an NTN.

In the NTN, the distance between a satellite and a UE changes due to the movement of the satellite, regardless of the movement of the UE. To overcome this issue, the UE may determine the location of the UE based on the GNSS and calculate the UE-specific TA, which is a round trip delay (RTD) between the UE and the satellite, based on satellite orbit information provided by the BS.

The common TA may refer to an RTD between the gNB (i.e., reference point) on the ground and the satellite.

Here, the reference point may mean a place where DL and UL frame boundaries match. The common TA may be defined as what the BS indicates to the UE. If the reference point is on the satellite, the common TA may not be indicated. If the reference point is at the gNB on the ground, the common TA may be used to compensate for the RTD between the gNB and the satellite.

As shown in FIG. 11, in the Rel-17 NTN, the UE may autonomously calculate a TA based on the GNSS capability of the UE and information provided by the BS (e.g., ephemeris information), which is referred to as the UE-specific TA. A TA calculated based on common TA parameters provided by the BS may be referred to as the common TA. Table 6 shows the final TA based thereon defined in TS 38.211.

[Table 6]

Uplink frame number $i$ for transmission from the UE shall start $T_{TA} = (N_{TA} +$

$N_{TA,offset} + N_{TA,adj}^{common} + N_{TA,adj}^{UE})T_c$ before the start of the corresponding downlink frame at the UE where

- $N_{TA}$ and $N_{TA,offset}$ are given by clause 4.2 of [5, TS 38.213], except for msgA transmission on PUSCH where $N_{TA} = 0$ shall be used;

- $N_{TA,adj}^{common}$ is derived from the higher-layer parameters *TACommon, TACommonDrift,* and *TACommonDriftVariation* if configured, otherwise $N_{TA,adj}^{common} = 0$;

- $N_{TA,adj}^{UE}$ is computed by the UE based on UE position and serving-satellite-ephemeris-related higher-layers parameters if configured, otherwise $N_{TA,adj}^{UE} = 0$.

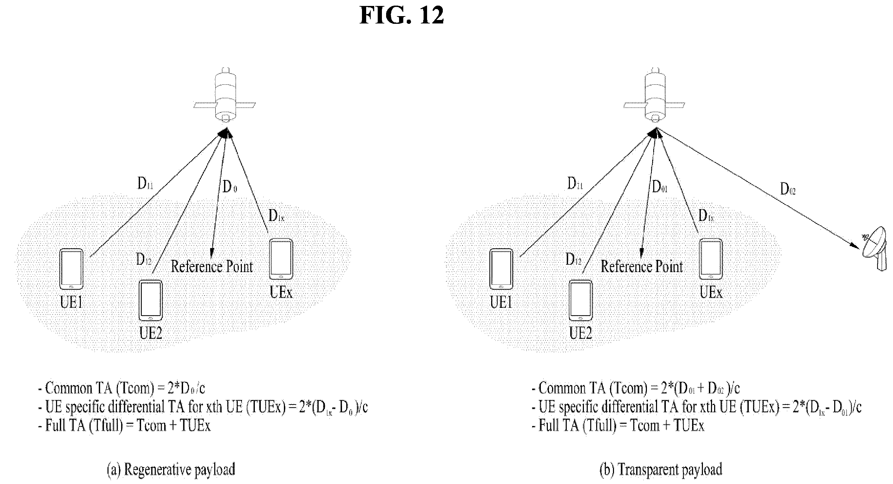

FIG. 12 is a diagram for explaining TAs in each of an NTN scenario based on regenerative payload and an NTN scenario based on transparent payload.

FIG. 12(a) illustrates the NTN scenario based on regenerative payload. The common TA (Tcom) (common to all UEs) may be calculated as 2D0 (distance between satellite and reference signal)/c, and the UE-specific differential TA (TUEx) for an x-th UE (UEx) may be calculated as 2(D1x-D0)/c. The total TA (Tfull) may be calculated as Tcom + TUEx. Here, D1x is the distance between the satellite and UEx, and c is the speed of light.

FIG. 12(b) illustrates the NTN scenario based on transparent payload. The common TA (Tcom) (common to all UEs) may be calculated as 2(D01+D02)/c, and the UE-specific differential TA (TUEx) for an x-th UE (UEx) may be calculated as 2(D1x-D0)/c. The total TA (Tfull) may be calculated as Tcom + TUEx. Here, D01 is the distance between the satellite and the reference point, and D02 is the distance between the satellite and the BS located on the ground.

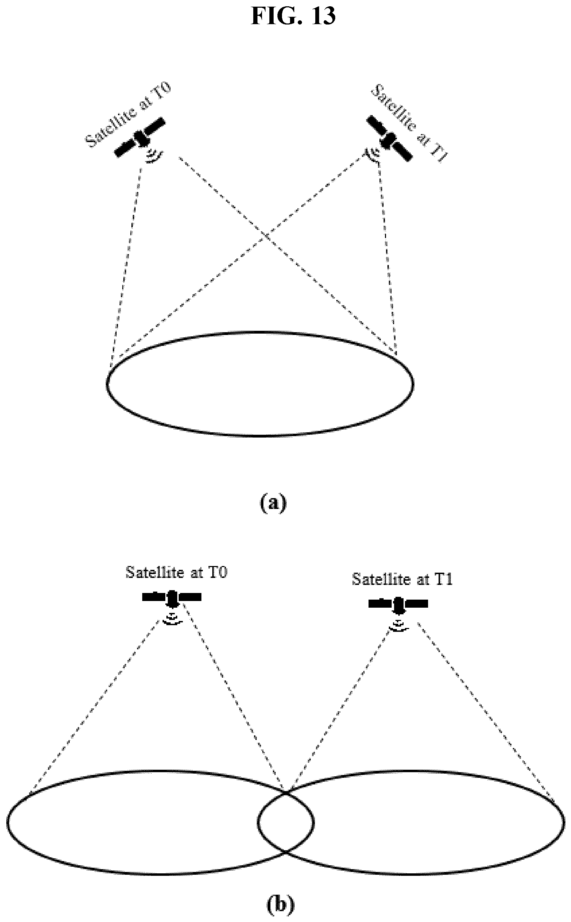

FIG. 13 is a diagram for explaining the type of cell supported by a satellite.

Referring to FIG. 13, depending on supported cell types, cells may be divided into (a) an Earth-fixed beam/cell and (b) a moving cell. The Earth-fixed cell (a) means that a cell is maintained within a specific location on the Earth's surface permanently or for a specific service duration based on the beam steering capability of the satellite. The Earth-moving cell (b) means that a cell moves continuously on the Earth's surface based on a fixed beam served by the satellite rather than using the beam steering capability of the satellite.

The frequency bands considered for NR NTN services are as follows: for bands below 6 GHz, the 2 GHz band (L-band: 1 to 2 GHz and S-band: 2 to 4 GHz) is being considered; and for bands above 6 GHz, the DL 20 GHz band and the UL 30 GHz band (Ka-Band: 26.5 to 40 GHz) are being considered. In particular, the NTN bands supported in Rel-17 are as follows.

- S-band (n256): UL 1980-2010MHz / DL 2170-2200 MHz
- L-band (n255): UL 1626.5-1660.5MHz / DL 1525-1559MHz

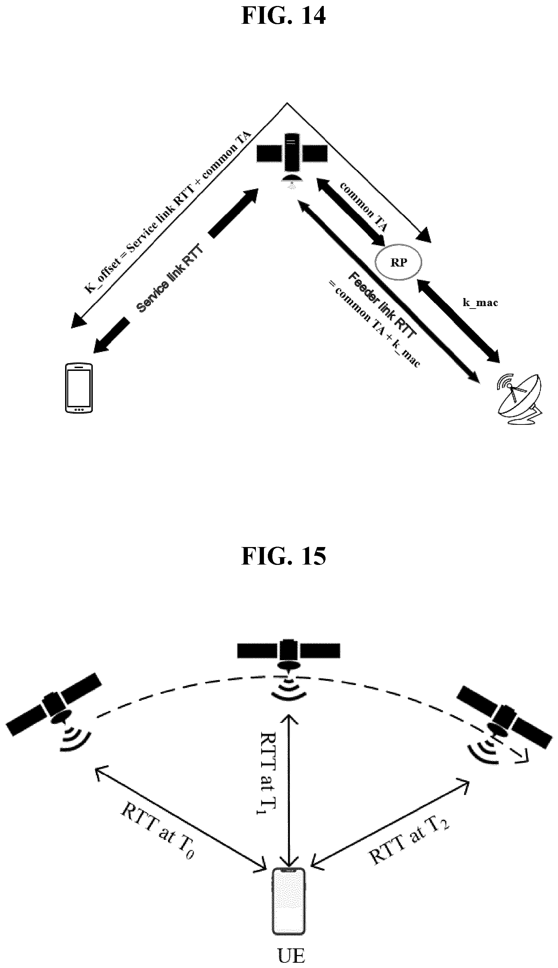

FIG. 14 is a diagram for explaining scheduling offsets in an NTN: K_offset and K_mac. To effectively operate the NTN with a very long RTT, the scheduling offsets: K_offset and K_mac are introduced.

Referring to FIG. 14, *K*_offset represents an offset value indicating the RTT of a UL time synchronization reference point (RP). *K*_offset is the sum of a service link RTT and a common TA (if indicated).

In addition, *k*_mac represents an offset value indicating the RTT between an RP and a gNB.

In Rel-17, two ephemeris formats are supported in Rel-17, and the contents thereof are as follows.

1) Position and velocity state vector ephemeris format: 132 bits (<17 bytes)

- The field size for position (x, y, z) (m) is 78 bits
- The field size for velocity (vx, vy, vz) (m/s) is 54 bits

2) Orbital parameter ephemeris format: 164 bits (<21 bytes)

- Semi-major axis "$\alpha$" (m) is 33 bits
- Eccentricity "e" is 20 bits
- Argument of periapsis "$\omega$" (rad) is 28 bits
- Longitude of ascending node "$\Omega$" (rad) is 28 bits
- Inclination "i" (rad) is 27 bits
- Mean anomaly "M" (rad) at epoch time to is 28 bits

In satellite-based communication, circular polarization is mainly used to enhance the straightness of radio waves. In Rel-17, system information (or SIB) signaling is introduced to inform the UE of polarization information used by the satellite. The polarization types included in the signaling are linear, right-hand circular polarization (RHCP), and left-hand circular polarization (LHCP)

## Multi-RTT based Positioning Method for NTN

Hereinafter, embodiments of RAT-dependent positioning techniques (e.g., multi-RTT, DL/UL-TDOA, etc.) in an NTN will be described.

As positioning techniques in the NTN, RAT-dependent positioning techniques are being considered in addition to GNSS-based (GPS) positioning. The primary purpose of the RAT-dependent positioning techniques is to prevent the malicious manipulation of UE GNSS information.

In the NTN, the UE location verified by the network (network verified UE location) may be determined through the RAT-dependent positioning techniques. Table 7 is an excerpt from sections related to network verified UE location in the following specifications: TS 23.501 and TS 23.502.

[Table 7]

| |
|---|
| [TS 23.501] |
| 5.4.11.4 Verification of UE location |
| In order to ensure that the regulatory requirements are met, the network may be configured to enforce that the selected PLMN is allowed to operate in the current UE location by verifying the UE location during Mobility Management and Session Management procedures. In this case, when the AMF receives a NGAP message containing User Location Information for a UE using NR satellite access, the AMF may decide to verify the UE location. If the AMF determines based on the Selected PLMN ID and ULI (including Cell ID) received from the gNB that it is not allowed to operate at the present UE location the AMF should reject any NAS request with a suitable cause value. If the UE is already registered to the network when the AMF determines that it is not allowed to operate at the present UE location, the AMF may initiate deregistration of the UE. The AMF should not reject the request or deregister the UE unless it has sufficiently accurate UE location information to determine that the UE is located in a geographical area where the PLMN is not allowed to operate. |
| NOTE: The area where the UE is allowed to operate can be determined based on the regulatory area where the PLMN is allowed to operate based on its licensing conditions. |
| If the AMF, based on the ULI, is not able to determine the UE's location with sufficient accuracy to make a final decision, the AMF proceeds with the Mobility Management or Session Management procedure and may initiate UE location procedure after the Mobility Management or Session Management procedure is complete, as specified in clause 6.10.1 of TS 23.273 [87], to determine the UE location. The AMF shall be prepared to deregister the UE if the information received from LMF indicates that the UE is registered to a PLMN that is not allowed to operate in the UE location. In the case of a NAS procedure, the AMF should either reject any NAS request targeted towards a PLMN that is not allowed to operate in the known UE location and indicate a suitable cause value, or accept the NAS procedure and initiate deregistration procedure once the UE location is known. In the deregistration message to the UE, the AMF shall include a suitable cause value. For UE processing of the cause value indicating that the PLMN is not allowed to operate in the current UE location, see TS 23.122 [17] and TS 24.501 [47]. |
| In the case of a handover procedure, if the (target) AMF determines that it is not allowed to operate at the current UE location, the AMF either rejects the handover, or accepts the handover and later deregisters the UE. |
| [TS 23.502] |

(continued)

> 4.2.2.2.2 General Registration
>
> ...
>
> 3. (R)AN to new AMF: N2 message (N2 parameters, Registration Request (as described in step 1) and [LTE-M Indication].
>
> When NG-RAN is used, the N2 parameters include the Selected PLMN ID (or PLMN ID and NID, see clause 5.30 of TS 23.501 [2]), Location Information and Cell Identity related to the cell in which the UE is camping, UE Context Request which indicates that a UE context including security information needs to be setup at the NG-RAN.
>
> ............
>
> For NR satellite access, the AMF may verify the UE location and determine whether the PLMN is allowed to operate at the UE location, as described in clause 5.4.11.4 of TS 23.501 [2]. If the UE receives a Registration Reject message with cause value indicating that the PLMN is not allowed to operate at the present UE location, the UE shall attempt to select a PLMN as specified in TS 23.122 [22].
>
> ............

Such network (NW) verification procedures may be considered for the following use cases: lawful intercept, emergency call, public warning system, charging and billing, that is, in cases where there are variations in national/regional laws and/or regulations. To carry out the NW verification procedures, the NW may consider RAT-based positioning in addition to UE GNSS-based location information. In recent standard meetings, an agreement has been reached regarding the NW verified UE location as shown in Table 8.

[Table 8]

> [Agreement]
> The following 3GPP defined RAT dependent positioning methods shall be considered as starting point for the study on Network verified UE location in case of NGSO based NTN deployment:
> - Multi-RTT
> - DL/UL-TDOA
> Note-1: Other methods (e.g. AoA based) are not precluded
> Note-2: RAT independent positioning methods are not under the scope of the study
> [Agreement]
> For evaluating positioning performance in NTN, the following metrics apply.
> Horizontal accuracy:
> - Horizontal accuracy is the difference between a calculated horizontal position by the network and the actual horizontal position of a UE (for evaluation purposes)
> - At least CDFs of horizontal positioning errors are used as a performance metrics in NR positioning evaluations
> - At least the following percentiles of positioning error is analyzed 50%, 67%, 80%, 90%, 95%

As shown in Table 8, multi-RTT and/or TDOA are being considered as the RAT-dependent positioning techniques.

In the multi-RTT technique for TN described above with reference to FIG. 9, a UL SRS and DL PRS for positioning may be used. The location server may provide a DL PRS configuration to the UE, and the BS may configure an SRS to the UE. Specifically, the UE may receive DL PRSs from BSs and transmit UL SRSs to the BSs. The UE measures and reports UE RX-TX time difference measurements for multiple pairs of TRPs/BSs. The UE RX-TX time difference measurement refers to the time difference from PRS reception to SRS transmission from the perspective of the UE. The BS measures and reports gNB RX-TX time difference measurements for the multiple pairs of TRPs/BSs. The gNB RX-TX time difference measurement refers to the time difference from PRS transmission to SRS reception from the perspective of the BS. The gNB RX-TX time difference measurement is greater than the UE RX-TX time difference measurement, and the distance between the UE and the corresponding BS may be calculated from the time difference between the gNB RX-TX time difference measurement and UE RX-TX time difference measurement. That is, an RTT may be calculated based on the difference between the UE Rx-Tx time difference and the gNB Rx-Tx time difference. Assuming that the UL and DL propagation delays are the same, a value equivalent to half of the UL and DL propagation delays may be considered as the common propagation delay applied to both DL and UL because it is satisfied that gNB Rx-Tx time difference - UE Rx-Tx time difference = UL propagation delay + DL propagation delay. While the multi-RTT technique has the advantage of being robust to synchronization errors, the multi-RTT technique requires a relatively long delay time and has an unfavorable structure for obtaining multiple measurements.

FIG. 15 is a diagram for explaining multi-RTT measurement based on a single satellite.

Specifically, FIG. 15 illustrates an example of applying a technique to measure multiple RTTs based on multiple BSs to an NTN based on a single satellite. The single satellite measures multiple RTTs over multiple timings, and a location server (e.g., LMF) calculates information on the location of the UE based on the multiple RTTs.

In an embodiment of the present disclosure, methods of efficiently applying the multi-RTT technique based on a single satellite are proposed.

## Proposal 1

The BS/TRP may signal to the LMF information on errors and/or delays for RTT calculation. The error/delay information may include some or all of the following.

- Satellite processing time (e.g., processing time required for amplify-and-forward or decode-and-forward)
- K_mac value and/or K_mac error range
- Common TA and/or common TA error range
- Delay time between gateway and BS
- Information on movement error (of UE reported by UE)
- Mobility information on NTN platform (e.g., ephemeris information and/or satellite velocity information)
- Beam information on NTN platform (e.g., SSB ID, CSI-RS ID, PRS ID, RSRP/SINR information thereon, beamwidth/boresight information, TCI state information)

For example, mobility information may be related to information on the position of the satellite at a specific time-stamp (e.g., information corrected based on a reference value) or information measured by the UE at the corresponding time.

In the NTN, links are divided into a feeder link between the RP and the satellite and a service link between the satellite and the UE, unlike the TN. The RP is controlled based on the K_mac value of the BS such that the RP is located at a distance from the gateway equivalent to the difference in UL and DL frame boundaries. Thus, potential sources of errors or timing delays during the RTT calculation may include processing delays that occur when the satellite receives and transmits signals (e.g., amplify-and-forward or decode-and-forward), errors in configuring the K_mac value between the gateway and RP, and delays between the BS and gNB. Although the BS is capable of calculating and transmitting the aforementioned error values separately to the LMF, the BS may transmit these error values to the LMF as a single representative error term/delay time. For example, the BS may transmit a representative value for feeder link delays to the LMF. Therefore, in the NTN, the following steps are required for multi-RTT calculation: the RTT between the satellite and UE may be calculated by subtracting twice the delay caused between the gateway and RP (K_mac) and/or between the RP and satellite (feeder link delay (or common TA)) from the gNB Rx-Tx time difference - UE Rx-Tx time difference. For more precise calculation, it is possible to report each parameter value and/or delay value based on specific measurement times. This is because in the case of a LEO satellite, the satellite move at a very high speed, which may lead to differences in delay between UL and DL. To this end, the BS may also transmit time information related to each measurement or parameter value to the LMF. In the multi-RTT operation, multiple measurements may be performed in the time domain. For example, the BS may transmit to the LMF the following measurements: the gNB Rx-Tx time difference and the UE Rx-Tx time difference at time points t0, t1, and t2 shown in FIG. 15 as well as the information listed in Proposal 1. Then, the LMF performs the multi-RTT calculation based on the gNB Rx-Tx time difference, UE Rx-Tx time difference, and information listed in Proposal 1. Subsequently, the LMF conducts NW verification regarding the UE location, which is obtained from the multi-RTT calculation.

### Proposal 1-1

The UE may provide to the LMF error information/delay information for RTT calculation. The error information/delay information signaled by the UE may include some or all of the following:

- GNSS error range of UE
- UE-specific TA calculated by UE
- Timing error value on UE side (e.g., measured DL timing drift/shift due to Doppler effect)
- Mobility information on UE (e.g., speed, direction, travel time, etc.)
- Beam information on UE (e.g., SRS ID, transmission power information, beamwidth/boresight information, etc.)

In Proposal 1-1, it is proposed to directly report a UE-specific TA value corresponding to the RTT between the UE and the satellite to the LMF. In this scenario, the UE-specific TA value calculated based on the GNSS needs to earn trust from the NW. Therefore, the multi-RTT technique based on this approach may be applied after the NW verifies UE location information. In other words, it is proposed to calculate an RTT according to Proposal 1 in an initial access step or a step in which the UE first verifies the UE location information with the NW and then calculate an RTT based on a UE-specific TA and/or timing error in subsequent steps. The BS may forward the values reported by the UE to the LMF (after recalculating/correcting the values). In the above proposal, the UE mobility information is additionally provided to the LMF in order to reduce errors that may occur while the UE is moving at the moment of measuring the RTT. Similarly to Proposal 1, the UE may include the listed information in a single representative delay or timing error value on the UE side and then report the single value to the LMF/BS.

In Proposals 1 and 1-1, assuming that ephemeris information is also reported to the LMF in order for the LMF to obtain information on the location of the satellite, a parameter set for calculating a common TA (e.g., TACommon, TACommonDrift, and TACommonDriftVariation) may also be signaled to the LMF. Additionally, the BS or NW may indicate/configure a threshold as criteria for error determination to assess the error information in Proposals 1 and 1-1 above. The threshold may be configured only for the representative value described above in Proposals 1 and 1-1. Then, the UE/BS may report the value to the LMF based on the threshold only if there is an error.

In the NTN, the mobility information may be information on the position of the satellite at a specific time-stamp (which may be information corrected based on the reference value) and reported along with information measured by the UE at the corresponding time.

In the beam information, the beamwidth may be either fixed or changed by steering. From the perspective of the NTN, assuming a fixed location, the direction in global coordinates may vary. Additionally, from the perspective of the NTN, the satellite may change the beam pointing direction to ensure that beams are transmitted to the same location on the ground.

## Proposal 2

For the multi-RTT operation based on a single satellite, the BS may instruct the UE to periodically/semi-periodically measure and report UE Rx-Tx time difference results to the LMF. In addition, the BS may provide the LMF with information regarding which measurements are used to perform the multi-RTT operation.

The purpose of Proposal 2 above is as follows. The UE needs to measure multiple UE Rx-Tx time differences based on a single satellite and report the multiple UE Rx-Tx time differences to the LMF, but due to a long RTT caused by the nature of an NTN, it may be cumbersome for the BS to trigger measuring and reporting of a UE Rx-Tx time difference at a specific point in time. To address this issue, the BS periodically/semi-periodically triggers measuring and/or reporting of UE Rx-Tx time differences. The BS may inform the LMF which measurements are used at the specific point in time, or the information may rely on a gNB Tx-Rx time difference reported by the BS. To measure the UE Rx-Tx time difference, one or more measurement windows may be configured. Until the measurement window is valid, the UE may measure and report the UE Rx-Tx time differences to the LMF according to a periodicity/offset, which is predetermined or determined by the BS. Alternatively, the UE may perform the measurement by considering a validity duration (window) configured by an NTN cell as a virtual measurement window, or the UE may consider only values within the specified window to be valid.

In the above proposal, for more flexible measurement, different IDs may be assigned to DL-PRSs and/or SRSs for positioning to measure each UE Rx-Tx time difference. In this case, multiple SRSs may be used for UL transmission based on different spatial relations. Additionally, a measurement window may be configured for each ID. Even for the same BWP/CC, measurement windows may be configured to overlap. The number of configurable windows may depend on the UE capability.

When the same ID is assigned to PRSs and/or SRSs for positioning for multiple measurements, the UE may report the maximum number of times that the UE is capable of performing measurement per ID as the UE capability. The BS may instruct the UE to perform measurement based on the UE capability. In this case, the UE may accumulate multiple measurement values and report the accumulated measurement values to the LMF at once. These values may include DL-PRS/SRS IDs for positioning, PRS RSRP, UE Rx-Tx time differences, and so on. To reduce the payload, these values may be reported as differential values based on a specific reference value (e.g., first measurement value (T0 in FIG A)). When UE Rx-Tx time differences are measured with one DL-PRS ID and/or SRS ID, there may be an overlap in timing between PRS reception and SRS transmission. Therefore, in cases where the same ID is used, the BS allocates resources to the UE to exclude the aforementioned scenario. When there is an overlap in timing between PRS reception and SRS transmission, for example, when a next PRS is received before the SRS transmission, if the UE capability is high, that is, if the UE has a sufficient processing time and/or a sufficient buffer capacity, the UE may receive the PRS. However, if the processing time or buffer capacity is insufficient, the UE may not attempt the PRS reception. To this end, the UE may report information on the memory/buffer status of the UE to the BS. Alternatively, a measurement gap may be configured between measurement events (e.g., t0, t1, t2 in FIG. A) to allow the UE to perform new measurement based on a DL-PRS, which is transmitted after the measurement gap.

For UE Rx-Tx time difference measurement, the following operation has been defined in NR specifications as shown in Table 9.

[Table 9]

| |
|---|
| For the DL RSTD, DL PRS-RSRP, and UE Rx-Tx time difference measurements the UE reports an associated higher layer parameter nr-TimeStamp. The nr-TimeStamp can include the dl-PRS-ID, the SFN and the slot number for a subcarrier spacing. These values correspond to the reference which is provided by nr-DL-PRS-ReferenceInfo. |

In other words, the UE reports time information on the measurement as a time-stamp. In the case of cumulative reporting based on a single PRS ID, the time-stamp information may contain multiple pieces of information. For example, when the UE reports N measurements, one PRS ID may be included along with N SFNs and/or N slot numbers. In another example, one PRS ID, one SFN, one slot number, and time differences (in units of msec/slot/symbol) between N-1 measurements may be reported to the LMF/BS. If multiple PRS IDs are used, the time-stamp information may be reported to the LMF/BS as N pieces of independent information. Alternatively, these two methods may be combined as follows: M reports may be provided for N measurements (where M < N). In this case, the M reports are associated with M PRS IDs.

In the above proposals, the term "NTN platform" may refer to satellites such as GEO satellites, MEO satellites, and LEO satellites or mobile objects such as HAPs, unmanned aerial vehicles (UAVs), drones, and airplanes.

The term "base station (BS)" may encompass objects involved in data transmission and reception with UEs. For instance, the BS may be a concept that includes one or more transmission points (TPs), one or more transmission and reception points (TRPs), etc. The TP and/or TRP may include panels, transmission and reception units, and so on of the BS. In addition, the term "TRP" may be replaced with a panel, antenna array, cell (e.g., macro cell/small cell/pico cell, etc.), TP, BS (gNB, etc.), and so on. As described above, TRPs may be distinguished based on information (e.g., index, ID) on CORESET groups (or CORESET pools). For example, when one UE is configured to transmit and receive with multiple TRPs (or cells), it may mean that multiple CORESET groups (or CORESET pools) are configured for the one UE. The configuration of such a CORESET group (or CORESET pool) may be performed through higher layer signaling (e.g., RRC signaling, etc.).

While the proposed methods may be implemented independently, some of the proposed methods may be combined (or merged) for implementation. In addition, it may be regulated that information on whether the proposed methods are applied (or information on rules related to the proposed methods) needs to be transmitted from the BS to the UE in a predefined signal (e.g., a physical layer signal, a higher layer signal, etc.). Higher layers may include, for example, at least one of the following functional layers: MAC, RLC, PDCP, RRC, and SDAP.

As an implementation example, regarding UL transmission of the UE, the UE may receive NTN-related configuration information, UL data-related information, and/or UL channel-related information. Thereafter, the UE may receive DCI/control information on transmission of UL data and/or UL channels. The DCI/control information may include scheduling information for the transmission of the UL data/UL channels. The UE may transmit the UL data/UL channels based on the scheduling information. The UE may perform the transmission of the UL data/UL channels until the UE transmits all configured/indicated UL data/UL channels. When the UE transmits all UL data/UL channels, the UE may terminate the UL transmission process.

As an implementation example, regarding DL reception of the UE, the UE may receive NTN-related configuration information, DL data-related information, and/or DL channel-related information. Thereafter, the UE may receive DCI/control information on reception of DL data and/or DL channels. The DCI/control information may include scheduling information for the DL data/DL channels. The UE may receive the DL data/DL channels based on the scheduling information. The UE may perform the reception of the DL data/DL channels until the UE receives all configured/indicated DL data/DL channels. When the UE receives all DL data/DL channels, the UE may determine whether feedback information for the received DL data/DL channels is required. If necessary, the UE may transmit HARQ-ACK feedback. If not necessary, the UE may terminate the reception process without transmitting the HARQ-ACK feedback.

As an implementation example, regarding UL reception of the BS, the BS may transmit NTN-related configuration information, UL data-related information, and/or UL channel-related information (to the UE). Thereafter, the BS may transmit DCI/control information on transmission of UL data and/or UL channels (to the UE). The DCI/control information may include scheduling information for the transmission of the UL data/UL channels. The BS may receive (from the UE) the UL data/UL channels transmitted based on the scheduling information. The BS may perform reception of the UL data/UL channels until the BS receives all configured/indicated UL data/UL channels. When the BS receives all UL data/UL channels, the BS may terminate the UL reception process.

As an implementation example, regarding DL transmission of the BS, the BS may transmit NTN-related configuration information, DL data-related information, and/or DL channel-related information (to the UE). Thereafter, the BS may transmit DCI/control information on reception of DL data and/or DL channels (to the UE). The DCI/control information may include scheduling information for the DL data/DL channels. The BS may transmit the DL data/DL channels (to the UE) based on the scheduling information. The BS may perform transmission of the DL data/DL channels until the BS transmits all configured/indicated DL data/DL channels. When the BS transmits all DL data/DL channels, the BS may determine whether reception of feedback information for the DL data/DL channels is required. If necessary, the BS may receive HARQ-ACK feedback. If not necessary, the BS may terminate the DL transmission process without receiving the HARQ-ACK feedback.

As an implementation example, the UE may be configured with a default HARQ operation mode in a step before the RRC connection/configuration. For example, if it is indicated over a PBCH (MIB) or SIB that the cell the UE has accessed is an NTN cell, the UE may perceive that the default mode is set to HARQ-disabled. For example, one of the HARQ-disabled configuration or the HARQ-enabled configuration may be indicated as the default operation mode over the PBCH (MIB) or SIB (for example, when the cell is indicated as the NTN cell).

As an implementation example, the UE may report to the BS information on the capability of the UE related to the proposed methods. For example, the UE capability information may include information on the number of times that a channel (e.g., PDSCH) supported/recommended for the UE is repeated, information on a slot aggregation level, and/or information on the number of supported HARQ processes. For example, the UE capability information may be reported periodically/semi-persistently/aperiodically. The BS may configure/indicate the following operations in consideration of the UE capability.

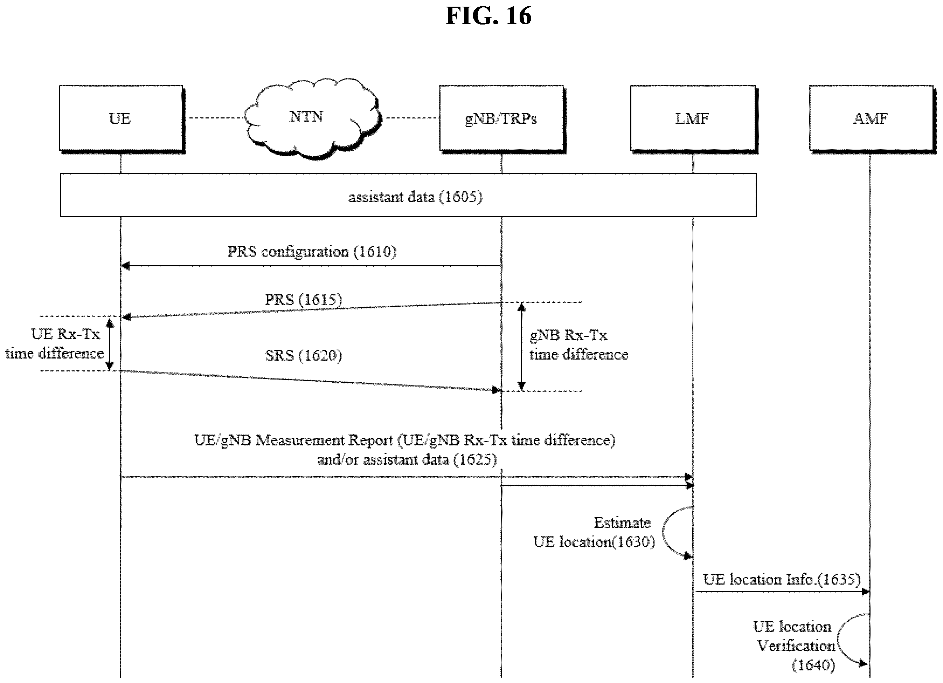

FIG. 16 is a diagram for explaining system operations supporting an NTN according to an embodiment.

In FIG. 16, UE positioning not relying on GNSS signals (B) is considered. The GNSS signals (B) are RAT-independent signals transmitted by satellites in the structure shown in FIG. 7. In other words, RAT-independent signals such as the GNSS signals (B) are not taken into consideration to avoid obscuring the points of explanation. In addition, radio signals (A) transmitted by a reference source BS (gNB) in FIG. 7 are RAT-dependent signals. FIG. 7 shows that the reference source BS (gNB) transmits the radio signals (A) directly to a target device, i.e., UE. However, in FIG. 16, signal transmission and reception between the UE and gNB may be performed through the NTN (satellite).

Referring to FIG. 16, an LMF (e.g., location server) may exchange assistant data for positioning with a UE and/or BS (1605). The LMF may transmit assistant data to the UE based on an LPP protocol. The BS may transmit assistant data to the LMF based on an NRPPa protocol. As described above, the assistant data transmitted by the BS to the LMF may include common TA information.

The BS may provide a PRS configuration to the UE (1610) and transmit a PRS based on the PRS configuration (1615). The UE may transmit an SRS for positioning after receiving the PRS (1620). The PRS/SRS transmission/reception between the UE and BS may be performed through the NTN (satellite).

The UE may report measurement information including a UE Rx-Tx time difference based on the PRS/SRS to the LMF through the LPP protocol (1625). The information that the UE transmits to the LMF may include information regarding DL timing drift. For example, the DL timing drift may be incorporated as part of the assistant data that the UE transmits to the LMF. The DL timing drift is a value measured by the UE. Specifically, the UE may estimate the DL timing shift caused by Doppler on a service link associated with a UE Rx-Tx time difference measurement period.

The BS may also measure a gNB Rx-Tx time difference based on the PRS/SRS and report the gNB Rx-Tx time difference to the LMF through the NRPPa protocol (1630). The gNB Rx-Tx time difference may be a gNB Rx-Tx time difference at a UL synchronization RP.

The LMF may calculate the location of the UE based on the measurement reports obtained from the UE and BS (1630) and then provide the calculated UE location to an AMF (1635).

The AMF may verify the UE location received from the LMF (1640).

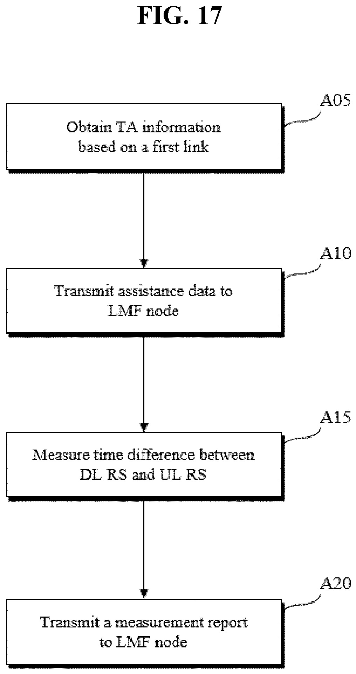

FIG. 17 is a diagram for explaining operations of a first device according to an embodiment.

Referring to FIG.17, the first device may obtain TA information based on a first link between a non-terrestrial node for an NTN and the first device (A05). The TA information may include common TA information between an RP configured on the first link and the non-terrestrial node.

The first device may transmit assistance data for NTN-based UE positioning to an LMF node (A10). The first device may report the common TA information to the LMF node through the assistance data.

The first device may measure a time difference between a UL reference signal and a DL reference signal (A15).

The first device may transmit a measurement report including information regarding the time difference to the LMF node (A20).

The non-terrestrial node may be a satellite, and the first device may be a terrestrial BS.

The first link may be a feeder link between the satellite and the terrestrial BS.

The time difference (e.g., gNB Rx-Tx time difference for NTN) between the UL reference signal and the DL reference signal may be a time difference between a PRS, which is transmitted by the first device to a UE through the non-terrestrial node, and an SRS, which is received by the first device from the UE through the non-terrestrial node, at the RP.

For the NTN-based UE positioning, information regarding a UE DL timing error may be provided to the LMF node.

The information regarding the UE DL timing error may include an estimate of a DL timing shift related to a Doppler effect.

The information regarding the UE DL timing error may be measured by a target UE for the NTN-based UE positioning.

The information regarding the UE DL timing error may be related to a time period in which the target UE measures the time difference between the UL reference signal and the DL reference signal.

The NTN-based UE positioning may be performed independently of a GNSS.

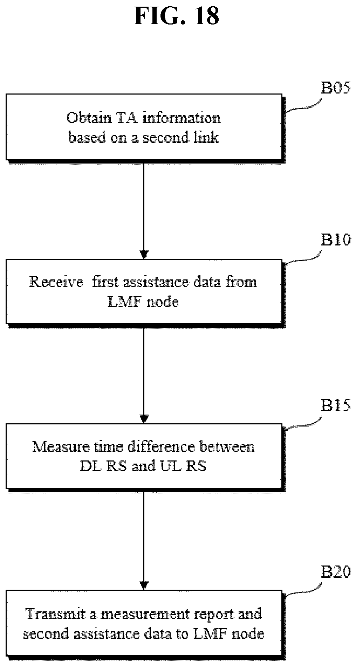

FIG. 18 is a diagram for explaining operations of a second device according to one embodiment.

Referring to FIG. 18, the second device may obtain TA information based on a second link between a non-terrestrial node for an NTN and the second device (B05). The TA information may include UE-specific TA information.

The second device may receive first assistance data for NTN-based UE positioning from an LMF node (B10).

The second device may measure a time difference between a UL reference signal and a DL reference signal (B15).

The second device may transmit a measurement report including information regarding the time difference and second assistance data to the LMF node (B20). The second device may report a timing error measured by the second device to the LMF node through the second assistance data.

The second device may be a UE. The second device may be a processing device that controls the UE.

The non-terrestrial node may be a satellite, and the second device may be a UE.

The second link may be a service link between the satellite and the UE.

The timing error measured by the second device may be a UE DL timing error measured by the UE.

The time difference between the UL reference signal and the DL reference signal (e.g., UE Rx-Tx time difference for NTN) may be a difference between a timing at which the second device receives a PRS from a BS through the non-terrestrial node and a timing at which the second device transmits an SRS to the BS through the non-terrestrial node.

Information regarding the UE DL timing error may include an estimate of a DL timing shift related to a Doppler effect.

The information regarding the UE DL timing error may be related to a time period in which the UE measures the time difference between the UL reference signal and the DL reference signal.

The NTN-based UE positioning may be performed independently of a GNSS.

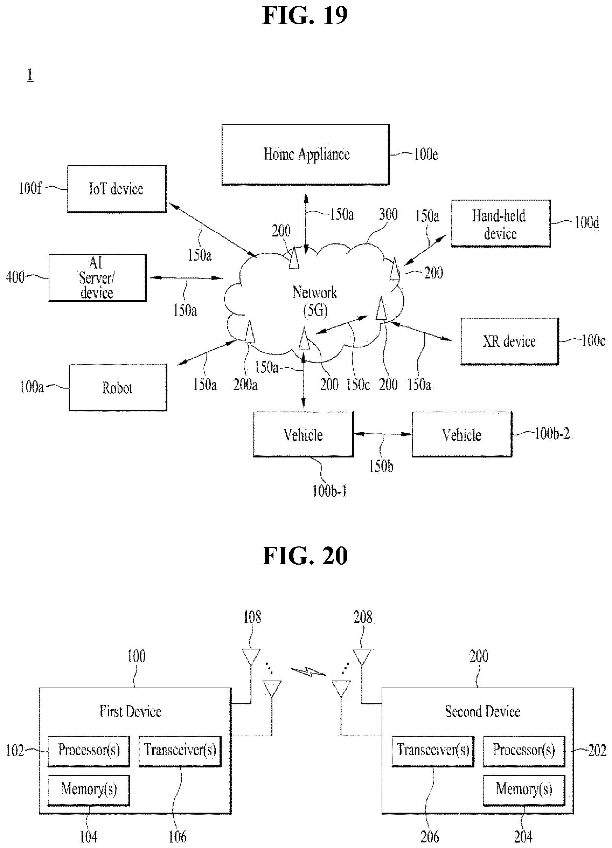

FIG. 19 illustrates a communication system 1 applied to the present disclosure.

Referring to FIG. 19, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 20 illustrates wireless devices applicable to the present disclosure.

Referring to FIG. 20, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 19.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In an embodiment of the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In an embodiment of the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

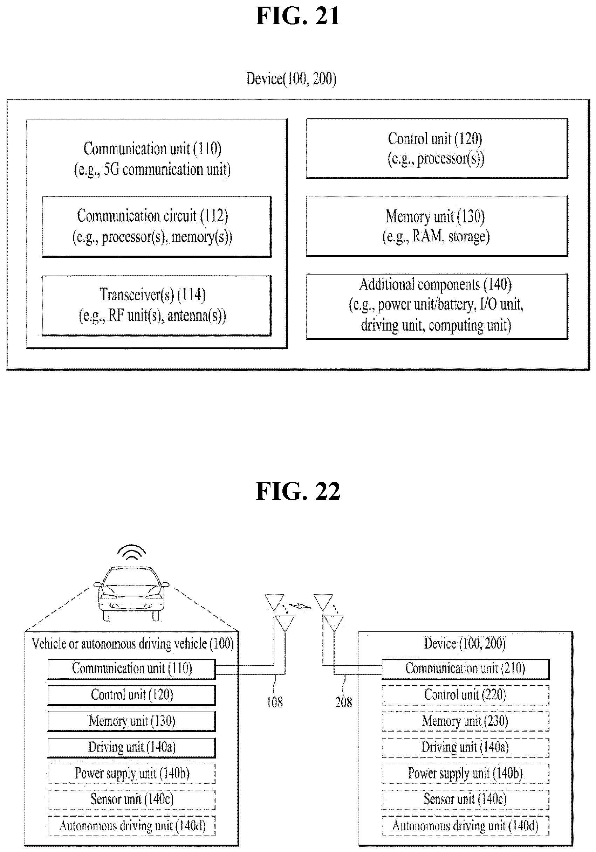

FIG. 21 illustrates another example of a wireless device applied to the present disclosure. The wireless device may be implemented in various forms according to a use-case/service (refer to FIG. 19).

Referring to FIG. 21, wireless devices 100 and 200 may correspond to the wireless devices 100 and 200 of FIG. 20 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 20. For example, the transceiver(s) 114 may include the one or more transceivers 106 and 206 and/or the one or more antennas 108 and 208 of FIG. 20. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 19), the vehicles (100b-1 and 100b-2 of FIG. 19), the XR device (100c of FIG. 19), the hand-held device (100d of FIG. 19), the home appliance (100e of FIG. 19), the IoT device (100f of FIG. 19), a digital broadcast terminal, a hologram device, a public safety device, an MTC device, a medicine device, a fintech device (or a finance device), a security device, a climate/environment device, the AI server/device (400 of FIG. 19), the BSs (200 of FIG. 19), a network node, etc. The wireless device may be used in a mobile or fixed place according to a use-example/service.

In FIG. 21, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 22 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 22, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 21, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

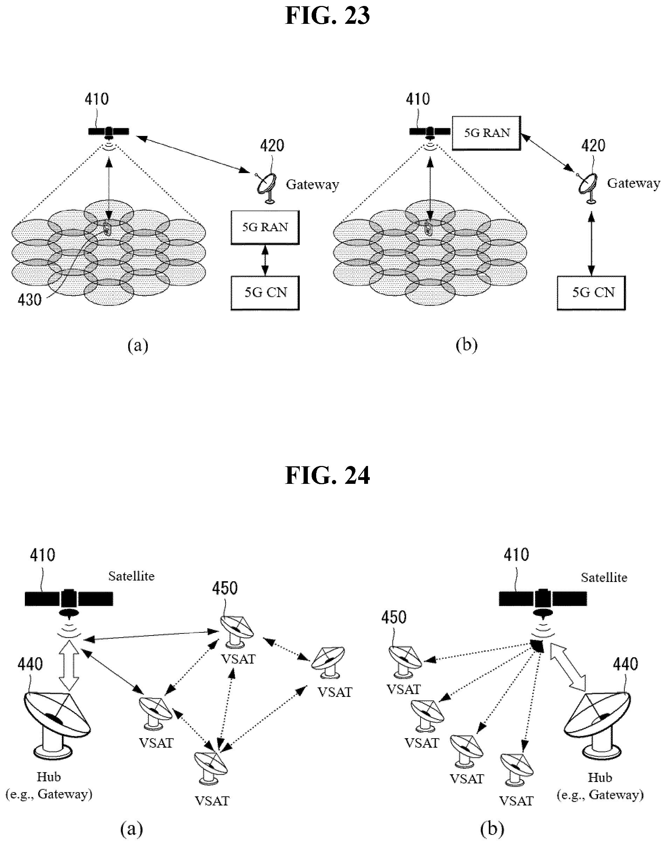

FIG. 23 illustrates an NTN applicable to the present disclosure. For example, the network 300 of FIG. 19 may be configured as the NTN. In addition, the NTN may be used for the above-described devices to perform the operations described herein.

The NTN refer to a wireless network configured with devices that are not fixed on the ground such as satellites. A representative example of the NTN is a satellite network. Based on the NTN, it may be possible to achieve network services with extended coverage and high reliability. For example, the NTN may be configured either independently or in conjunction with existing terrestrial networks to create a wireless communication system.

Use cases capable of being provided in a communication system based on the NTN may be divided into three categories. The "Service Continuity" category may be used to provide network connectivity in geographic areas where access to 5G services is not available through the wireless communication coverage of terrestrial networks. For example, satellite connectivity may be used for UEs associated with pedestrian users, UEs on moving terrestrial platforms (e.g., cars, coaches, trucks, trains), aerial platforms (e.g., commercial or private jets), or maritime platforms (e.g., maritime vessels). In the "Service Ubiquity" category, when terrestrial networks are unavailable (due to, for example, disasters, destruction, economic situations, etc.), satellite connectivity may be utilized for following: IoT, public safety-related emergency networks, home access, and so on. The "Service Scalability" category encompasses services based on the extensive coverage of satellite networks.

Referring to FIG. 23, the NTN includes one or more satellites 410, one or more NTN gateways 420 capable of communicating with the satellites, and one or more UEs (and/or BSs) 430 capable of receiving mobile satellite services from the satellites. In FIG. 23, the explanation focuses on the NTN including satellites for simplicity, but the scope of the present disclosure is not limited thereto. Accordingly, the NTN may include not only the satellites but also aerial vehicles (UAS encompassing tethered UAS (TUA), Lighter than Air UAS (LTA), Heavier than Air UAS (HTA), and all operating in altitudes typically between 8 and 50 km including HAPs).

The satellite 410 is a space-borne vehicle equipped with a bent pipe payload or a regenerative payload telecommunication transmitter and may be located in the LEO, MEO, or GEO. The NTN gateway 420 is an earth station or gateway existing on the surface of the Earth and may provide sufficient RF power/sensitivity to access the satellite. The NTN gateway corresponds to a transport network layer (TNL) node. The one or more UEs (and/or BSs) 430 may be wireless devices (100a to 100f) and/or BS 200. In addition, the one or more UEs (and/or BSs) may be implemented as devices. The wireless devices 100a to 100f may be connected to the NTN via the BS 200 and/or satellite 410.

The NTN may have i) a link between a satellite and a UE, ii) a link between satellites, iii) a link between a satellite and an NTN gateway. A service link refers to the radio link between the satellite and UE. Inter-satellite links (ISLs) between satellites may be present if there are multiple satellites. A feeder link refers to the radio link between the NTN gateway and satellite (or UAS platform). The gateway may be connected to a data network and may communicate with the satellite through the feeder link. The UE may communicate with the satellite through the service link.

For NTN operation scenarios, two scenarios based on transparent payload and regenerative payload may be considered. FIG. 23(a) shows an exemplary scenario based on the transparent payload. In the scenario based on the transparent payload, the signal repeated by the payload remains unchanged. The satellite 410 repeats the NR-Uu radio interface from the feeder link to the service link (or vice versa), and a satellite radio interface (SRI) on the feeder link is NR-Uu. The NTN gateway 420 supports all functions required for transmitting signals on the NR-Uu interface. In addition, different transparent satellites may be connected to the same gNB on the ground. FIG. 23(b) shows an exemplary scenario based on the regenerative payload. In the scenario based on the regenerative payload, the satellite 410 may perform some or all of the functions of the conventional BS (e.g., gNB). In other words, the satellite 410 may perform some or all of frequency conversion/demodulation/decoding/modulation. For the service link between the UE and satellite, the NR-Uu radio interface is used, and for the feeder link between the NTN gateway and satellite, the SRI is used. The SRI corresponds to a transport link between the NTN gateway and satellite.

The UE 430 may be connected to a 5G core network (5GCN) through both an NTN-based NG-RAN and a conventional cellular NG-RAN. Alternatively, the UE may be connected to the 5GCN via two or more NTNs (e.g., LEO NTN, GEO NTN, etc.).

FIG. 24 illustrates a very-small-aperture terminal (VSAT) applicable to the present disclosure.

The VSAT 450 may refer to an antenna/device capable of bidirectional communication with an antenna (plate) less than 3 meters. For example, the VSAT may be fixedly located on the ground or may be fixedly mounted on a vehicle/marine vessel. An NTN may be configured with VSATs. Referring to FIG. 24, the VSAT is configured in the form of a mesh topology (FIG. 24(a)) or a start topology (FIG. 24(b)). In the case of the mesh topology, each VSAT may be configured to directly communicate with another VSAT. On the other hand, in the case of the start topology, multiple VSATs may be connected through a hub, and communication between VSATs may be performed through the hub. For example, the VSAT 450 may operate as the NTN gateway 420 and/or BS. For example, the VSAT 450 may operate as an IAB node and/or the BS on IAB links to be described later. For example, the NTN gateway 420 may be connected to the satellite 410, the satellite 410 may be connected to the VSAT 450, and the VSAT 450 may be connected to the UE 430 to provide services. In this case, the VSAT 450 may communicate with the satellite 430 as an IAB Mobile Termination (IAB-MT) and may service the UE 430 as an IAB distributed unit (IAB-DU). In addition, the satellite 410 may operate as a parent node.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, an embodiment may be configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

The present disclosure is applicable to UEs, BSs, or other apparatuses in a wireless mobile communication system.

**Claims**

1. A method performed by a first device in a wireless communication system including a non-terrestrial network (NTN), the method comprising:

   obtaining timing advance (TA) information based on a first link between a non-terrestrial node for the NTN and the first device;
   transmitting assistance data for NTN-based user equipment (UE) positioning to a location management function (LMF) node;
   measuring a time difference between an uplink reference signal and a downlink reference signal; and
   transmitting a measurement report including information regarding the time difference to the LMF node,
   wherein the TA information comprises common TA information between a reference point (RP) configured on the first link and the non-terrestrial node, and
   wherein the first device reports the common TA information to the LMF node through the assistance data.

2. The method of claim 1, wherein the non-terrestrial node is a satellite,

   wherein the first device is a terrestrial base station, and
   wherein the first link is a feeder link between the satellite and the terrestrial base station.

3. The method of claim 1, wherein the time difference between the uplink reference signal and the downlink reference signal is a time difference between a positioning reference signal (PRS) and a sounding reference signal (SRS) at the RP,

   wherein the PRS is transmitted by the first device to a UE through the non-terrestrial node, and
   wherein the SRS is received by the first device from the UE through the non-terrestrial node.

4. The method of claim 1, wherein for the NTN-based UE positioning, information regarding a UE downlink timing error is provided to the LMF node.

5. The method of claim 4, wherein the information regarding the UE downlink timing error comprises an estimate of a downlink timing shift related to a Doppler effect.

6. The method of claim 4, wherein the information regarding the UE downlink timing error is measured by a target UE for the NTN-based UE positioning.

7. The method of claim 6, wherein the information regarding the UE downlink timing error is related to a time period in which the target UE measures the time difference between the uplink reference signal and the downlink reference signal.

8. The method of claim 1, wherein the NTN-based UE positioning is performed independently of a global navigation satellite system (GNSS).

9. A processor-readable recording medium having recorded thereon a program for executing the method of claim 1.

10. A method performed by a second device in a wireless communication system including a non-terrestrial network (NTN), the method comprising:

    obtaining timing advance (TA) information based on a second link between a non-terrestrial node for the NTN and the second device;
receiving first assistance data for NTN-based user equipment (UE) positioning from a location management function (LMF) node;
measuring a time difference between an uplink reference signal and a downlink reference signal; and
transmitting a measurement report including information regarding the time difference and second assistance data to the LMF node,
wherein the TA information comprises UE-specific TA information, and
wherein the second device reports a timing error measured by the second device to the LMF node through the second assistance data.

11. The method of claim 10, wherein the non-terrestrial node is a satellite,

   wherein the second device is a UE,
   wherein the second link is a service link between the satellite and the UE, and
   wherein the timing error measured by the second device is a downlink timing error measured by the UE.

12. A first device in a wireless communication system including a non-terrestrial network (NTN), the first device comprising:

   a memory storing instructions; and
   a processor configured to perform operations by executing the instructions,
   wherein the operations of the processor comprise:

      obtaining timing advance (TA) information based on a first link between a non-terrestrial node for the NTN and the first device;
      transmitting assistance data for NTN-based user equipment (UE) positioning to a location management function (LMF) node;
      measuring a time difference between an uplink reference signal and a downlink reference signal; and
      transmitting a measurement report including information regarding the time difference to the LMF node,
      wherein the TA information comprises common TA information between a reference point (RP) configured on the first link and the non-terrestrial node, and
      wherein the first device reports the common TA information to the LMF node through the assistance data.

13. The first device of claim 11, further comprising a transceiver, wherein the first device is a terrestrial base station.

14. A second device in a wireless communication system including a non-terrestrial network (NTN), the second device comprising:

   a memory storing instructions; and
   a processor configured to perform operations by executing the instructions,
   wherein the operations of the processor comprise:

      obtaining timing advance (TA) information based on a second link between a non-terrestrial node for the NTN and the second device;
      receiving first assistance data for NTN-based user equipment (UE) positioning from a location management function (LMF) node;
      measuring a time difference between an uplink reference signal and a downlink reference signal; and
      transmitting a measurement report including information regarding the time difference and second assistance data to the LMF node,
      wherein the TA information comprises UE-specific TA information, and
      wherein the second device reports a timing error measured by the second device to the LMF node through the second assistance data.

15. The second device of claim 14, further comprising a transceiver, wherein the second device is a UE.

# FIG. 1

| Initial Cell Search | System Information Reception | Random Access Procedure | General DL/UL Tx/Rx S18 |
|---|---|---|---|

PSS/SSS & [DLRS] & PBCH

PDCCH/ PDSCH (BCCH)

PRACH

PDCCH/ PDSCH

PRACH

PDCCH/ PDSCH

PDCCH/ PDSCH

PUSCH/ PUCCH

S11    S12    S13    S14    S15    S16    S17

• DL/UL ACK/NACK
• UE CQI/PMI/Rank Report using PUSCH and PUCCH

# FIG. 2

One Frame (10ms)

Half-Frame (5ms)    Half-Frame (5ms)

| Subframe 0 (1ms) | ...... | Subframe 4 (1ms) | Subframe 5 (1ms) | ...... | Subframe 9 (1ms) |

Subframe (1ms)

| 15KHz | Slot (14 symbols) |
|---|---|

1ms

| 30KHz | Slot 0 (14 symbols) | Slot 1 |
|---|---|---|

500us

| 60KHz | Slot 0 (14 symbols) | Slot 1 | Slot 2 | Slot 3 |
|---|---|---|---|---|

250us

| 120KHz | Slot 0 (14 symbols) | Slot 1 | Slot 2 | Slot 3 | Slot 4 | Slot 5 | Slot 6 | Slot 7 |
|---|---|---|---|---|---|---|---|---|

125us

28

# FIG. 3

Resource grid

A carrier
(up to 3300 subcarriers, i. e., 275 RBs)

A BWP

1 RB = 12 subcarriers

1 RE

1 subcarrier

1 symbol

# FIG. 4

One slot

# FIG. 5

DL assingment-to-PDSCH offset (K0)

PDCCH

PDSCH

PUCCH

slot

PDSCH-to-HARQ-ACK reporting offset (K1)

# FIG. 6

UL grant-to-PUSCH offset (K2)

PDCCH

PUSCH

# FIG. 7

Reference Source

GNSS signals (B)

LPP

Measurements(A,B or A+B) or Location

Assistance Data

Target Device

UE/SET

Location server

E-SMLC/SLP/LMF

radio signals (A)

- E-CID Location Information Transfer
- OTDOA Information Transfer
- Reporting of General Error Situations

NRPPa

Reference Source

ACCESS NODE / BS / TS / NG-RAN

# FIG. 8

# FIG. 9

| Initiating Device | | Responding Device |
|---|---|---|
| transmit RTT measurement request | 1301 | |
| transmit RTT measurement signal at $t_0$ | | receive RTT measurement request |
| | 1303 | TOA measurement $t_1$ |
| | 1305 | transmit RTT measurement signal at $t_2$ |
| TOA measurement $t_3$ | | transmit $[t_2-t_1]$ |
| RTT=$t_3$-$t_0$-$[t_2-t_1]$ | 1307 | |

(a)

$d_1$

BS$_1$

$d_2$

BS$_2$

$d_3$ BS$_3$

Target Device Location

(b)

33

EP 4 598 167 A1

# FIG. 10

Field of view of the satellite (or UAS platform)

(a)

Field of view of the satellite (or UAS platform)

(b)

# FIG. 11

# FIG. 12

- Common TA (Tcom) = $2 \ast D_0/c$
- UE specific differential TA for xth UE (TUEx) = $2 \ast (D_{1x} - D_0)/c$
- Full TA (Tfull) = Tcom + TUEx

(a) Regenerative payload

- Common TA (Tcom) = $2 \ast (D_{01} + D_{02})/c$
- UE specific differential TA for xth UE (TUEx) = $2 \ast (D_{1x} - D_{01})/c$
- Full TA (Tfull) = Tcom + TUEx

(b) Transparent payload

EP 4 598 167 A1

# FIG. 13

(a)

(b)

# FIG. 14

# FIG. 15

# FIG. 16

UE — NTN — gNB/TRPs — LMF — AMF

assistant data (1605)

PRS configuration (1610)

PRS (1615)

UE Rx-Tx time difference

gNB Rx-Tx time difference

SRS (1620)

UE/gNB Measurement Report (UE/gNB Rx-Tx time difference) and/or assistant data (1625)

Estimate UE location(1630)

UE location Info.(1635)

UE location Verification (1640)

EP 4 598 167 A1

# FIG. 17

```
┌──────────────────────────┐
│   Obtain TA information   │  A05
│   based on a first link   │
└──────────────────────────┘
              │
              ▼
┌──────────────────────────┐
│   Transmit assistance     │  A10
│   data to LMF node        │
└──────────────────────────┘
              │
              ▼
┌──────────────────────────┐
│  Measure time difference  │  A15
│  between DL RS and UL RS  │
└──────────────────────────┘
              │
              ▼
┌──────────────────────────┐
│  Transmit a measurement   │  A20
│  report to LMF node       │
└──────────────────────────┘
```

# FIG. 18

Obtain TA information
based on a second link
B05

Receive first assistance data from
LMF node
B10

Measure time difference between
DL RS and UL RS
B15

Transmit a measurement report and
second assistance data to LMF node
B20

# FIG. 19

# FIG. 20

# FIG. 21

Device(100, 200)

| | |
|---|---|
| Communication unit (110) (e.g., 5G communication unit) | Control unit (120) (e.g., processor(s)) |
| Communication circuit (112) (e.g., processor(s), memory(s)) | Memory unit (130) (e.g., RAM, storage) |
| Transceiver(s) (114) (e.g., RF unit(s), antenna(s)) | Additional components (140) (e.g., power unit/battery, I/O unit, driving unit, computing unit) |

# FIG. 22

| Vehicle or autonomous driving vehicle (100) | | | Device (100, 200) |
|---|---|---|---|
| Communication unit (110) | | | Communication unit (210) |
| Control unit (120) | 108 | 208 | Control unit (220) |
| Memory unit (130) | | | Memory unit (230) |
| Driving unit (140a) | | | Driving unit (140a) |
| Power supply unit (140b) | | | Power supply unit (140b) |
| Sensor unit (140c) | | | Sensor unit (140c) |
| Autonomous driving unit (140d) | | | Autonomous driving unit (140d) |

# FIG. 23

(a)

(b)

# FIG. 24

(a)

(b)

## INTERNATIONAL SEARCH REPORT

| International application No. |
|---|
| **PCT/KR2023/014664** |

| A. | CLASSIFICATION OF SUBJECT MATTER |
|---|---|
| | **H04W 64/00**(2009.01)i; **H04W 56/00**(2009.01)i; **H04B 17/20**(2015.01)i; **H04W 4/029**(2018.01)i; **H04W 84/06**(2009.01)i |

According to International Patent Classification (IPC) or to both national classification and IPC

| B. | FIELDS SEARCHED |
|---|---|

Minimum documentation searched (classification system followed by classification symbols)

H04W 64/00(2009.01); G01S 19/25(2010.01); H04W 24/10(2009.01); H04W 4/029(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: NTN, TA, LMF, 어시스턴스 데이터(assistance data), 시간 차이(time difference), 공통 TA(common TA)

| C. | DOCUMENTS CONSIDERED TO BE RELEVANT |
|---|---|

| Category* | Citation of document, with indication, where appropriate, of the relevant passages | Relevant to claim No. |
|---|---|---|
| X<br>A | 3GPP; TSG SA; Release 17 Description; Summary of Rel-17 Work Items (Release 17). 3GPP TR 21.917 V1.0.0. 09 September 2022.<br>See pages 10-11 and 24-25. | 1-3,9,12-13<br>4-8,10-11,14-15 |
| A | US 2018-0343635 A1 (QUALCOMM INCORPORATED) 29 November 2018 (2018-11-29)<br>See paragraphs [0091]-[0113]; and figures 8-10. | 1-15 |
| A | US 2020-0053690 A1 (QUALCOMM INCORPORATED) 13 February 2020 (2020-02-13)<br>See paragraphs [0179]-[0212]; and figures 6-8. | 1-15 |
| A | US 2022-0015058 A1 (SAMSUNG ELECTRONICS CO., LTD.) 13 January 2022 (2022-01-13)<br>See paragraphs [0282]-[0290]; and figure 10. | 1-15 |
| A | US 2021-0385625 A1 (COMCAST CABLE COMMUNICATIONS, LLC) 09 December 2021 (2021-12-09)<br>See claims 1-9. | 1-15 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 January 2024** | **09 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/014664**

| Patent document cited in search report | | | Publication date (day/month/year) | Patent family member(s) | | | Publication date (day/month/year) |
|---|---|---|---|---|---|---|---|
| US | 2018-0343635 | A1 | 29 November 2018 | BR | 112019024571 | A2 | 09 June 2020 |
| | | | | CA | 3060621 | A1 | 29 November 2018 |
| | | | | CN | 110651512 | A | 03 January 2020 |
| | | | | CN | 110651512 | B | 26 November 2021 |
| | | | | CN | 112543504 | A | 23 March 2021 |
| | | | | EP | 3632170 | A1 | 08 April 2020 |
| | | | | EP | 3825715 | A1 | 26 May 2021 |
| | | | | JP | 2020-522167 | A | 27 July 2020 |
| | | | | JP | 2023-065361 | A | 12 May 2023 |
| | | | | JP | 7220158 | B2 | 09 February 2023 |
| | | | | KR | 10-2020-0013692 | A | 07 February 2020 |
| | | | | TW | 201902276 | A | 01 January 2019 |
| | | | | TW | I706682 | B | 01 October 2020 |
| | | | | US | 10433275 | B2 | 01 October 2019 |
| | | | | US | 10779256 | B2 | 15 September 2020 |
| | | | | US | 2020-0037283 | A1 | 30 January 2020 |
| | | | | WO | 2018-217323 | A1 | 29 November 2018 |
| | | | | WO | 2018-217323 | A8 | 28 February 2019 |
| US | 2020-0053690 | A1 | 13 February 2020 | CN | 112534877 | A | 19 March 2021 |
| | | | | EP | 3834497 | A1 | 16 June 2021 |
| | | | | KR | 10-2021-0042092 | A | 16 April 2021 |
| | | | | TW | 202027543 | A | 16 July 2020 |
| | | | | TW | I804667 | B | 11 June 2023 |
| | | | | US | 11191056 | B2 | 30 November 2021 |
| | | | | WO | 2020-033614 | A1 | 13 February 2020 |
| US | 2022-0015058 | A1 | 13 January 2022 | CN | 111930278 | A | 13 November 2020 |
| | | | | CN | 111930278 | B | 10 June 2022 |
| | | | | CN | 111970646 | A | 20 November 2020 |
| | | | | CN | 111970646 | B | 26 April 2022 |
| | | | | CN | 113918081 | A | 11 January 2022 |
| | | | | CN | 113922081 | A | 11 January 2022 |
| | | | | CN | 113923685 | A | 11 January 2022 |
| | | | | EP | 3937306 | A1 | 12 January 2022 |
| | | | | JP | 2022-016284 | A | 21 January 2022 |
| | | | | JP | 7096926 | B2 | 06 July 2022 |
| | | | | KR | 10-2022-0006452 | A | 17 January 2022 |
| | | | | KR | 10-2023-0037545 | A | 16 March 2023 |
| | | | | US | 11677148 | B2 | 13 June 2023 |
| | | | | US | 11733831 | B2 | 22 August 2023 |
| | | | | US | 11789648 | B2 | 17 October 2023 |
| | | | | US | 2022-0011909 | A1 | 13 January 2022 |
| | | | | US | 2022-0011976 | A1 | 13 January 2022 |
| | | | | US | 2022-0013907 | A1 | 13 January 2022 |
| | | | | US | 2023-0209623 | A1 | 29 June 2023 |
| | | | | WO | 2022-007149 | A1 | 13 January 2022 |
| | | | | WO | 2022-007592 | A1 | 13 January 2022 |
| | | | | WO | 2022-010215 | A1 | 13 January 2022 |
| US | 2021-0385625 | A1 | 09 December 2021 | CA | 3121361 | A1 | 04 December 2021 |
| | | | | EP | 3920610 | A1 | 08 December 2021 |
| | | | | EP | 3920610 | A4 | 08 December 2021 |

Form PCT/ISA/210 (patent family annex) (July 2022)